# EUROPEAN PATENT APPLICATION

(11) **EP 4 745 792 A1**
(43) Date of publication of application: **20.05.2026**
(21) Application number: 25216003.1
(22) Date of filing: 14.11.2025
(51) Int. Cl.: G06F 13/42, G06F 11/22

(54) **ERROR DETECTION AND REPAIR FOR SERIALLY CONNECTED DEVICES**

(30) Priority: 16.11.2024 US 202463721475 P
(71) Applicant: Space Exploration Technologies Corp., Hawthorne, California 90250 (US)
(72) Inventor: JACQUET, David Francois, Hawthorne, CA 90250 (US); PEPIN, Eric, Hawthorne, CA 90250 (US); BUTAYE, Benoit, Hawthorne, CA 90250 (US); ROULENQ, Olivier, Hawthorne, CA 90250 (US); AGAH, Amir, Hawthorne, CA 90250 (US); SCHULZE, Kim W., Hawthorne, CA 90250 (US)
(74) Representative: Mewburn Ellis LLP

(57) **Abstract**

Systems and techniques for detecting connection failures for serially connected worker modules (WMs) are disclosed. A method for detecting connection failures for serially connected WMs includes driving a chip select (CS) signal at a known voltage level to a first IO port of a first WM of a chain of serially connected WMs, propagating the CS signal to a second IO port of the first WM, wherein the second IO port of the first WM is configured to be coupled to a first IO port of a second WM of the chain of serially connected WMs, and determining, based on detecting that a signal at a voltage level different than the known voltage level is present at the first IO port of the second WM, that a connection failure is present between the first WM and the second WM.

## Description

### TECHNICAL FIELD

The present disclosure generally relates to error detection and repair for serially connected devices.

### BACKGROUND

Serial communication interfaces can advantageously be used to communicate using a limited number of signals. In some applications, the number of signals that can be used for communication can be limited by a number of available package pins. In some cases, increasing the number of package pins may require increasing package size of individual integrated circuit (IC) chips. In some applications, package size for individual IC chips may be limited by constraints on area, routing, uniformity, spacing, or the like.

It would be advantageous to configure serial communication interfaces and associated circuitry having increased reliability, reduced weight, reduced size, lower manufacturing cost, and/or lower power requirements. Accordingly, embodiments of the present disclosure are directed to these and other improvements in serial communication interfaces or portions thereof.

### SUMMARY

This summary is provided to introduce a selection of concepts in a simplified form that are further described below in the Detailed Description. This summary is not intended to identify key features of the claimed subject matter, nor is it intended to be used as an aid in determining the scope of the claimed subject matter.

Systems and techniques for detecting connection faults in serially connected worker modules (WMs) are disclosed. In one example, a method for detecting connection faults in serially connected worker modules WMs includes driving a chip select (CS) signal at a known voltage level to a first IO port of a first WM of a chain of serially connected WMs, propagating the CS signal to a second IO port of the first WM, wherein the second IO port of the first WM is configured to be coupled to a first IO port of a second WM of the chain of serially connected WMs, and determining, based on detecting that a signal at a voltage level different than the known voltage level is present at the first IO port of the second WM, that a connection failure is present between the first WM and the second WM.

In another example, an apparatus for detecting connection faults in serially connected worker modules WMs is provided that includes a memory configured to store at least one frame and one or more processors (e.g., implemented in circuitry) coupled to the memory. The one or more processors are configured to and can: drive a chip select CS signal at a known voltage level to a first IO port of a first WM of a chain of serially connected WMs, propagate the CS signal to a second IO port of the first WM, wherein the second IO port of the first WM is configured to be coupled to a first IO port of a second WM of the chain of serially connected WMs, and determine, based on detecting that a signal at a voltage level different than the known voltage level is present at the first IO port of the second WM, that a connection failure is present between the first WM and the second WM.

In another example, a non-transitory computer-readable medium is provided that has stored thereon instructions that, when executed by one or more processors, cause the one or more processors to: drive a chip select CS signal at a known voltage level to a first IO port of a first WM of a chain of serially connected WMs, propagate the CS signal to a second IO port of the first WM, wherein the second IO port of the first WM is configured to be coupled to a first IO port of a second WM of the chain of serially connected WMs, and determine, based on detecting that a signal at a voltage level different than the known voltage level is present at the first IO port of the second WM, that a connection failure is present between the first WM and the second WM.

In accordance with another embodiment of the present disclosure, an apparatus for detecting connection faults in serially connected worker modules WMs is provided. The apparatus includes: means for driving a chip select CS signal at a known voltage level to a first IO port of a first WM of a chain of serially connected WMs, means for propagating the CS signal to a second IO port of the first WM, wherein the second IO port of the first WM is configured to be coupled to a first IO port of a second WM of the chain of serially connected WMs, and means for determining, based on detecting that a signal at a voltage level different than the known voltage level is present at the first IO port of the second WM, that a connection failure is present between the first WM and the second WM.

In another example, a method for detecting connection faults in serially connected worker modules WMs includes broadcasting a command set to each WM of a chain of serially connected WMs to update an identifier value of each WM of the chain of serially connected WMs; and determining, based on detecting that an identifier value of a particular WM of the chain of serially connected WMs failed to update, that a serial communication failure is present at the particular WM.

In another example, an apparatus for processing one or more frames is provided that includes a memory configured to store at least one frame and one or more processors (e.g., implemented in circuitry) coupled to the memory. The one or more processors are configured to and can: broadcast a command set to each WM of a chain of serially connected WMs to update an identifier value of each WM of the chain of serially connected WMs; and determine, based on detecting that an identifier value of a particular WM of the chain of serially connected WMs failed to update, that a serial communication failure is present at the particular WM.

In another example, a non-transitory computer-readable medium is provided that has stored thereon instructions that, when executed by one or more processors, cause the one or more processors to: broadcast a command set to each WM of a chain of serially connected WMs to update an identifier value of each WM of the chain of serially connected WMs; and determine, based on detecting that an identifier value of a particular WM of the chain of serially connected WMs failed to update, that a serial communication failure is present at the particular WM.

In accordance with another embodiment of the present disclosure, an apparatus for detecting connection faults in serially connected worker modules WMs is provided. The apparatus includes: means for broadcasting a command set to each WM of a chain of serially connected WMs to update an identifier value of each WM of the chain of serially connected WMs; and means for determining, based on detecting that an identifier value of a particular WM of the chain of serially connected WMs failed to update, that a serial communication failure is present at the particular WM.

In another example, a method for detecting connection faults in serially connected worker modules WMs includes configuring each WM of a chain of serially connected WMs in a reverse propagation direction, wherein a default configuration for each WM of the chain of serially connected WMs is a forward propagation direction along a serial connection path between the WMs of the chain of serially connected WMs; driving a first voltage level in the reverse propagation direction along the serial connection path; and determining, based on detecting a second voltage level at an IO port of a particular WM of the chain of serially connected WMs, a location of a serial communication failure at a particular WM of the chain of serially connected WMs, wherein the second voltage level is different from the first voltage level.

In another example, an apparatus for processing one or more frames is provided that includes a memory configured to store at least one frame and one or more processors (e.g., implemented in circuitry) coupled to the memory. The one or more processors are configured to and can: configure each WM of a chain of serially connected WMs in a reverse propagation direction, wherein a default configuration for each WM of the chain of serially connected WMs is a forward propagation direction along a serial connection path between the WMs of the chain of serially connected WMs; drive a first voltage level in the reverse propagation direction along the serial connection path; and determine, based on detecting a second voltage level at an IO port of a particular WM of the chain of serially connected WMs, a location of a serial communication failure at a particular WM of the chain of serially connected WMs, wherein the second voltage level is different from the first voltage level.

In another example, a non-transitory computer-readable medium is provided that has stored thereon instructions that, when executed by one or more processors, cause the one or more processors to: configure each WM of a chain of serially connected WMs in a reverse propagation direction, wherein a default configuration for each WM of the chain of serially connected WMs is a forward propagation direction along a serial connection path between the WMs of the chain of serially connected WMs; drive a first voltage level in the reverse propagation direction along the serial connection path; and determine, based on detecting a second voltage level at an IO port of a particular WM of the chain of serially connected WMs, a location of a serial communication failure at a particular WM of the chain of serially connected WMs, wherein the second voltage level is different from the first voltage level.

In accordance with another embodiment of the present disclosure, an apparatus for detecting connection faults in serially connected worker modules WMs is provided. The apparatus includes: means for configuring each WM of a chain of serially connected WMs in a reverse propagation direction, wherein a default configuration for each WM of the chain of serially connected WMs is a forward propagation direction along a serial connection path between the WMs of the chain of serially connected WMs; driving a first voltage level in the reverse propagation direction along the serial connection path; and determining, based on detecting a second voltage level at an IO port of a particular WM of the chain of serially connected WMs, a location of a serial communication failure at a particular WM of the chain of serially connected WMs, wherein the second voltage level is different from the first voltage level.

### BRIEF DESCRIPTION OF THE DRAWINGS

In order to describe the manner in which the various advantages and features of the disclosure can be obtained, a more particular description of the principles described above will be rendered by reference to specific embodiments thereof, which are illustrated in the appended drawings. Understanding that these drawings depict only example embodiments of the disclosure and are not to be considered to limit its scope, the principles herein are described and explained with additional specificity and detail through the use of the drawings in which:
FIG. 1 illustrates an example configuration of a command module (CM) coupled to two chains of serially connected worker modules (WMs) over a serial communication interface, in accordance with some examples of the present disclosure;
FIG. 2A illustrates an example configuration of serially connected chains of WMs coupled to a common chip select (CS) port of a CM, in accordance with some examples of the present disclosure;
FIG. 2B through FIG. 2F illustrate an example enumeration sequence utilizing simultaneous reverse propagation for distinguishing between serially connected chains of WMs coupled to a common CS port of a CM, in accordance with some examples of the present disclosure;
FIG. 3A illustrates an example block diagram of a WM configuration that can be utilized for assigning unique identifiers, detecting connection failures, and/or repairing unique identifiers for WMs included in chains of serially connected WMs, in accordance with some examples of the present disclosure;
FIG. 3B illustrates an example configuration for a failure module included in the WM configuration of FIG. 3A, in accordance with some examples of the present disclosure;
FIG. 4A illustrates an example configuration for detecting a failure of a CS port and/or a serial CS port of a WM included in a chain of serially connected WMs, in accordance with some examples of the present disclosure;
FIG. 4B is a state diagram illustrating an example failure detection process for the configuration of FIG. 4A, in accordance with some examples of the present disclosure;
FIG. 5A illustrates an example serial communication failure detection configuration for detecting serial communication failures in a chain of serially connected WMs, in accordance with some examples of the present disclosure;
FIG. 5B illustrates an example failure detection process for detecting serial communication faults in WMs of the chains of serially connected WMs, in accordance with some examples of the present disclosure;
FIG. 5C illustrates example identifier values for the first WM, second WM, and third WM of the chain of serially connected WMs after completion of the failure detection process of FIG. 5B, in accordance with some examples of the present disclosure;
FIG. 6A illustrates an example sequence for detecting serial communication failures in WMs of a chain of serially connected WMs, in accordance with some examples of the present disclosure;
FIG. 6B illustrates an example serial communication failure detection configuration 600 for WMs of a chain of serially connected WMs, in accordance with some examples of the present disclosure;
FIG. 7A is a flow diagram illustrating a process for detecting connection failures in chains of serially connected WMs, in accordance with some examples of the present disclosure;
FIG. 7B is an additional flow diagram illustrating a process for detecting connection failures in chains of serially connected WMs, in accordance with some examples of the present disclosure;
FIG. 7C is an additional flow diagram illustrating a process for detecting connection failures in chains of serially connected WMs, in accordance with some examples of the present disclosure;
FIG. 8 is a diagram illustrating an example of a system for implementing certain aspects of the present technology.

### DETAILED DESCRIPTION

Certain aspects and embodiments of this disclosure are provided below. Some of these aspects and embodiments may be applied independently and some of them may be applied in combination as would be apparent to those of skill in the art. In the following description, for the purposes of explanation, specific details are set forth in order to provide a thorough understanding of embodiments of the application. However, it will be apparent that various embodiments may be practiced without these specific details. The figures and description are not intended to be restrictive.

The ensuing description provides example embodiments only, and is not intended to limit the scope, applicability, or configuration of the disclosure. Rather, the ensuing description of the exemplary embodiments will provide those skilled in the art with an enabling description for implementing an exemplary embodiment. It should be understood that various changes may be made in the function and arrangement of elements without departing from the spirit and scope of the application as set forth in the appended claims.

In the drawings, some structural or method features may be shown in specific arrangements and/or orderings. However, it should be appreciated that such specific arrangements and/or orderings may not be required. Rather, in some embodiments, such features may be arranged in a different manner and/or order than shown in the illustrative figures. Additionally, the inclusion of a structural or method feature in a particular figure is not meant to imply that such feature is required in all embodiments and, in some embodiments, it may not be included or may be combined with other features.

References in the specification to "one embodiment," "an embodiment," "an illustrative embodiment," etc., indicate that the embodiment described may include a particular feature, structure, or characteristic, but every embodiment may or may not necessarily include that particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. Language such as "top", "bottom", "upper", "lower", "vertical", "horizontal", "lateral", in the present disclosure is meant to provide orientation for the reader with reference to the drawings and is not intended to be the required orientation of the components or to impart orientation limitations into the claims.

The phrase "coupled to" refers to any component that is physically connected to another component either directly or indirectly, and/or any component that is in communication with another component (e.g., connected to the other component over a wired or wireless connection, and/or other suitable communication interface) either directly or indirectly.

In some aspects, systems, apparatuses, processes (also referred to as methods), and computer-readable media (collectively referred to herein as "systems and techniques") are described herein for providing a synchronous serial interface with clock-data swap capability.

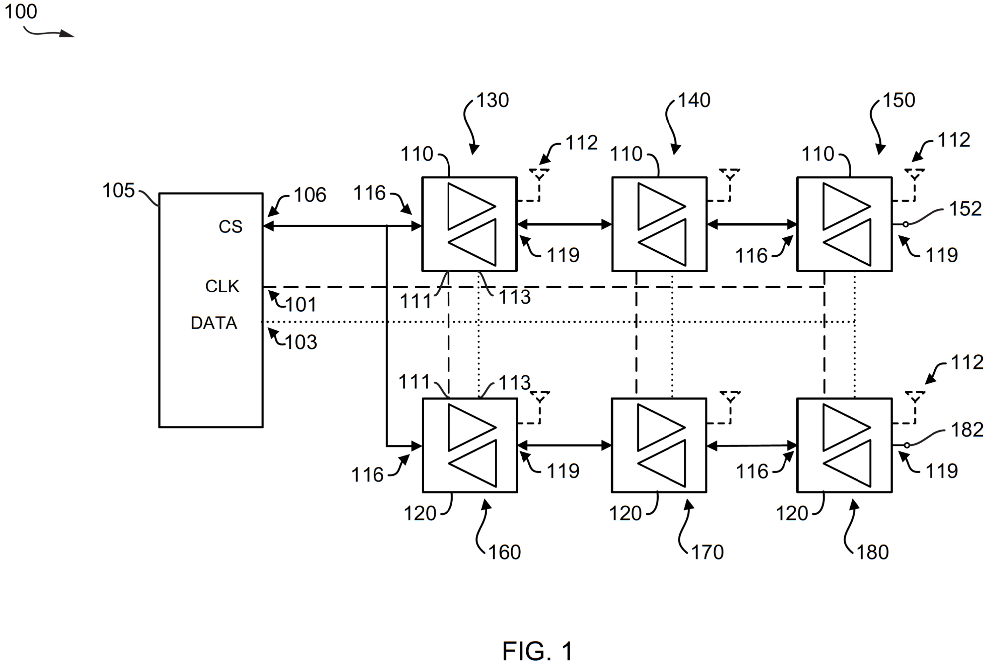

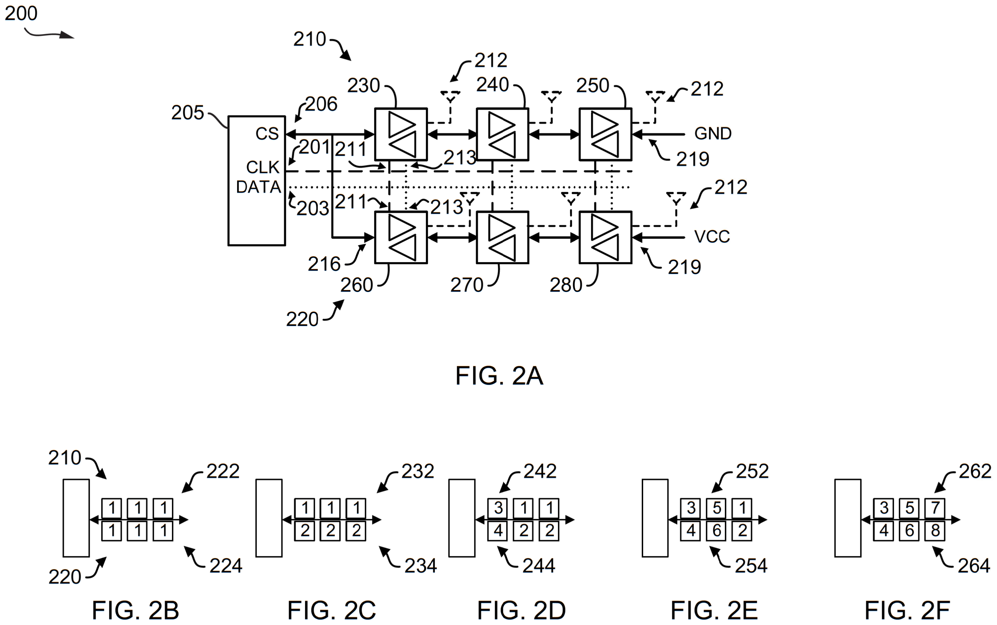

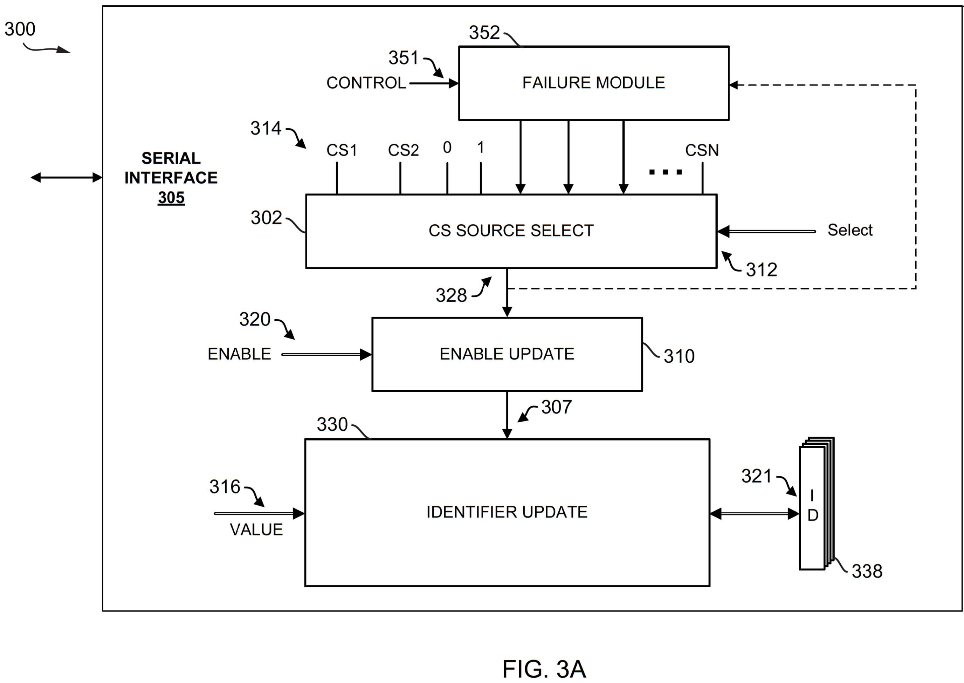

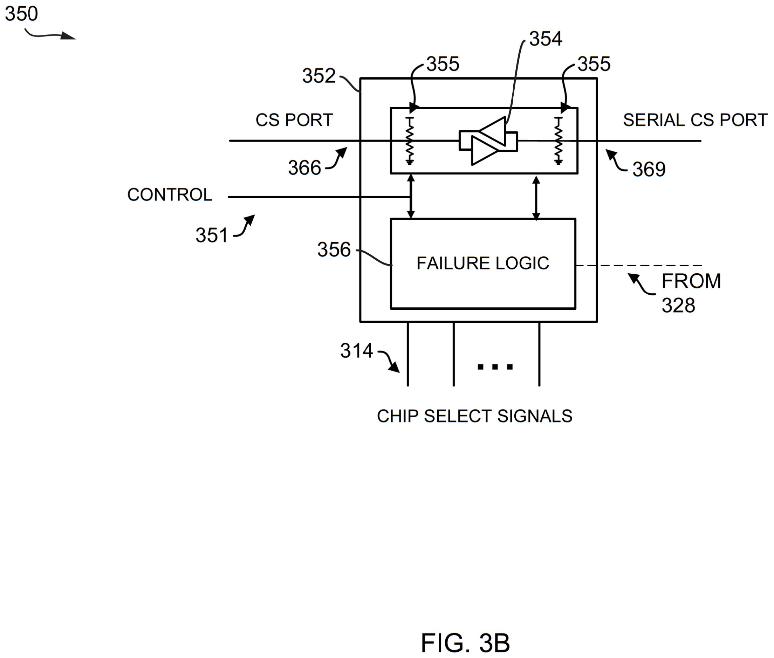

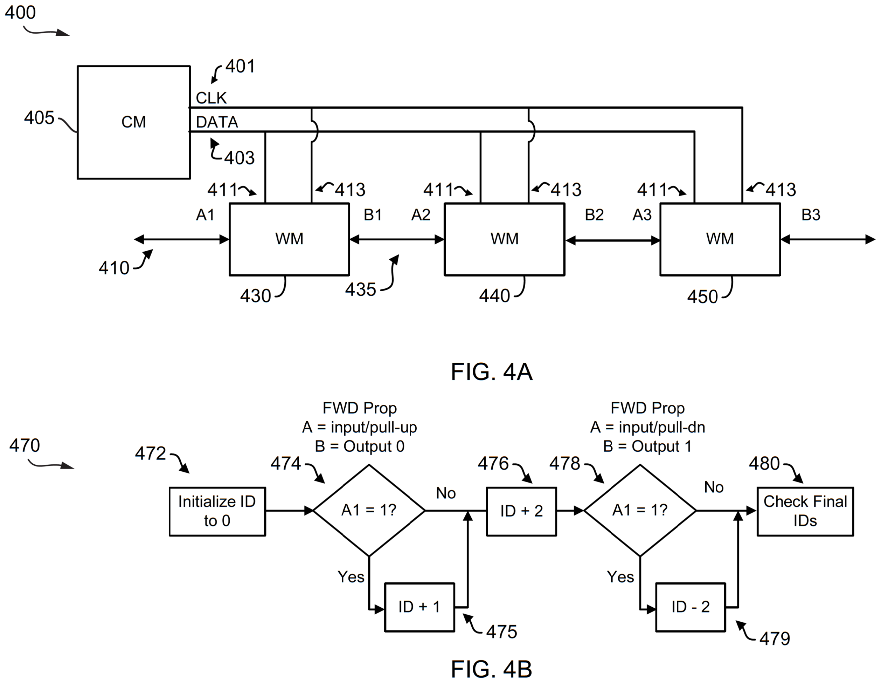

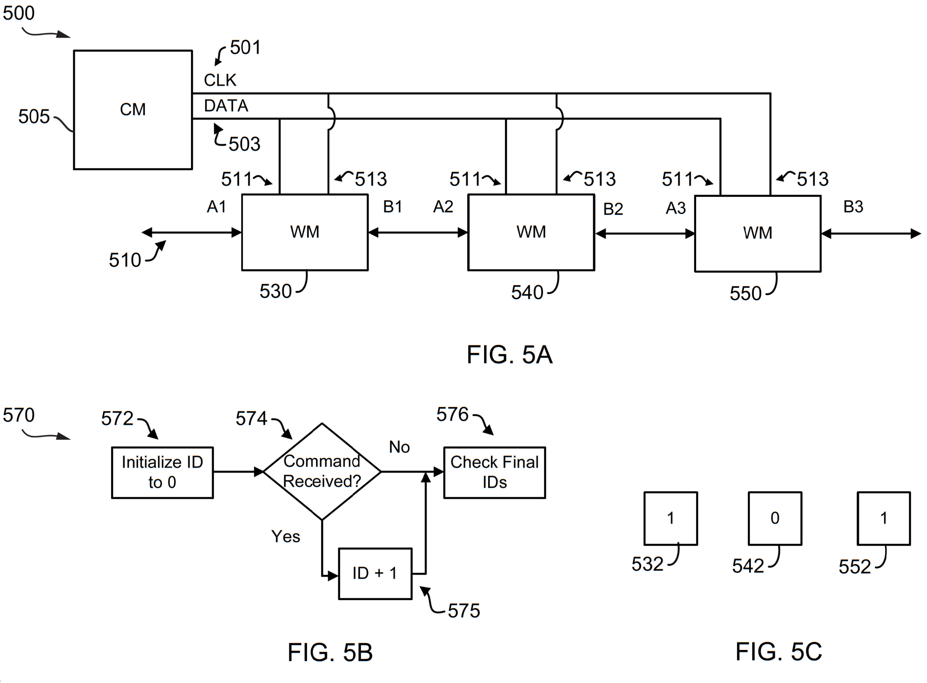

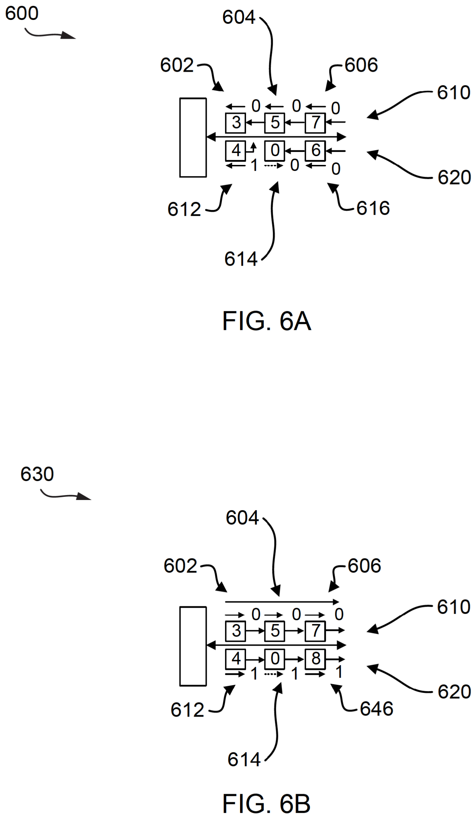

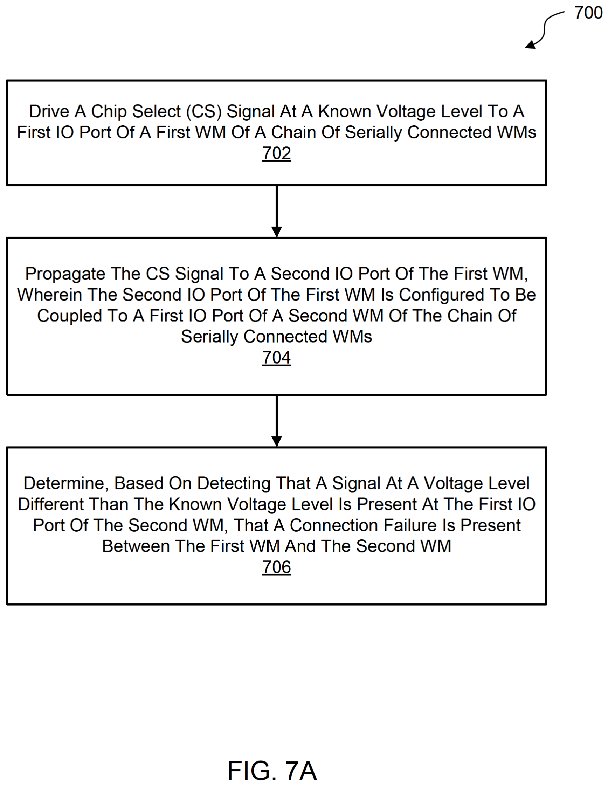

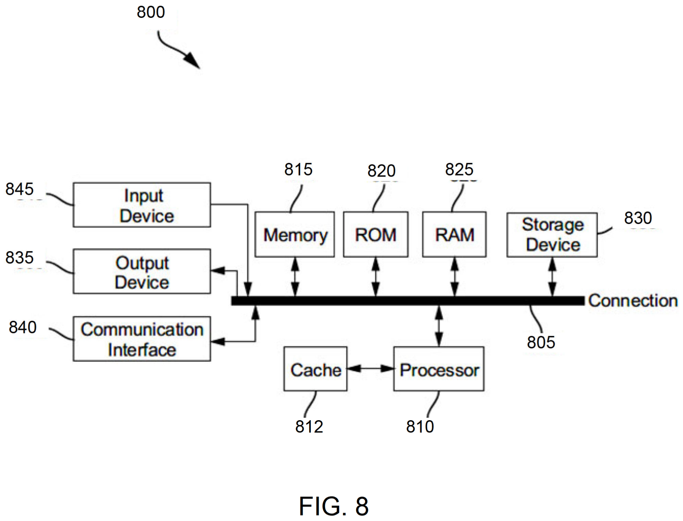

The disclosed systems and techniques will be described in the following disclosure as follows. The discussion begins with a description of an example configuration of a command module (CM) coupled to two chains of serially connected worker modules (WMs) over a serial communication interface, as illustrated in FIG. 1. An example configuration of serially connected chains of WMs coupled to a common chip select (CS) port of a CM, as illustrated in FIG. 2A, will then follow. An example enumeration sequence utilizing simultaneous reverse propagation for distinguishing between serially connected chains of WMs coupled to a common CS port of a CM, as illustrated in FIG. 2B through FIG. 2F, will then follow. An example block diagram of a WM configuration that can be utilized for assigning unique identifiers, detecting connection failures, and/or repairing unique identifiers for WMs included in chains of serially connected WMs, as illustrated in FIG. 3A, will then follow. An example configuration for a failure module included in the WM configuration of FIG. 3A, as illustrated in FIG. 3B, will then follow. An example configuration for detecting a failure of a CS port and/or a serial CS port of a WM included in a chain of serially connected WMs, as illustrated in FIG. 4A, will then follow. A state diagram illustrating an example failure detection process for the configuration of FIG. 4A, as illustrated in FIG. 4B, will then follow. An example serial communication failure detection configuration for detecting serial communication failures in a chain of serially connected WMs, as illustrated in FIG. 5A, will then follow. An example failure detection process for detecting serial communication faults in WMs of the chains of serially connected WMs, as illustrated in FIG. 5B, will then follow. An example identifier values for the first WM, second WM, and third WM of the chain of serially connected WMs after completion of the failure detection process of FIG. 5B, as illustrated in FIG. 5C, will then follow. An example sequence for detecting serial communication failures in WMs of a chain of serially connected WMs, as illustrated in FIG. 6A, will then follow. An example serial communication failure detection configuration 600 for WMs of a chain of serially connected WMs, as illustrated in FIG. 6B, will then follow. Flow diagrams illustrating processes for error detection in chains of serially connected WMs, as illustrated in FIG. 7A through FIG. 7C, will then follow. The discussion concludes with a diagram illustrating an example computing device architecture, as illustrated in FIG. 8. The disclosure now turns to FIG. 1.

FIG. 1 illustrates an example configuration 100 for enumeration of worker module (WM) identifiers over a serial interface. In some cases, CM 105 can communicate with WMs of a first chain of serially connected WMs 110 and a second chain of serially connected WMs 120. For example, the CM 105 can include hardware, software, electrical components, and/or any combination thereof for coordinating the operation of the WMs of the first chain of serially connected WMs 110 and the second chain of serially connected WMs 120. In some cases, the CM 105 can communicate with the WMs of the first chain of serially connected WMs 110 and the second chain of serially connected WMs 120 over a serial communication interface (e.g., a two-wire serial interface). In some implementations, the CM 105 can include a CS port 106, a clock port 101, and a data port 103. In some cases, the CM 105 can be implemented as an integrated circuit (IC) chip and the CS port 106, clock port 101, and data port 103 can correspond to individual pins of the IC chip.

In the illustrated example of FIG. 1, the WMs included in the first chain of serially connected WMs 110 and WMs included in the second chain of serially connected WMs 120 each include a clock port 111, a data port 113, an input/output (IO) port 116 and a serial IO port 119. In some cases, a continuous connection can be provided between the clock port 101 of the CM 105 and all of the clock ports 111 of the WMs of the first chain of serially connected WMs 110. Similarly, in some examples, a continuous connection can be provided between data port 103 of the CM 105 and all of the data ports 113 of the second chain of serially connected WMs 120. In some cases, one or more of the WMs coupled to the clock port 101 and the data port 103 may be operated in a clock-data swapped configuration as described in more detail with respect to FIG. 3A below.

In some cases, the CM 105 may transmit commands over the serial communication interface to the WMs of the first chain of serially connected WMs 110 and the WMs of the second chain of serially connected WMs 120 simultaneously using the clock port 101 and the data port 103. In some implementations, commands received by multiple different WMs that may be included in one or more chains of serially connected WMs may be utilized to assign unique identifiers to each WM.

In some cases, the serial connections between WMs of the first chain of serially connected WMs 110 can be configured in a pass-through configuration. As used herein, a "pass-through configuration" refers to a configuration where a WM directly connected to a selected CS source and other WMs same chain of serially connected WMs are all selected simultaneously based on the signal received from the selected CS source. In some cases, a CS source can include one or more logical value (e.g., logical "1" values and/ or logical "0" values). In some cases, a CS source can be derived based on one or more inputs available to a WM. For example, without limitation, a CS source can be derived based on a frequency, phase, amplitude, modulation scheme, presence of power, any other characteristic, and/or any combination thereof of one or more signals available to the WM may be used to derive a signal that can be utilized as a CS source. For the purposes of illustration, various example configurations for assigning unique identifiers described herein may include CS sources implemented as logical values. However, it should be understood that other types of CS sources may be utilized without departing from the scope of the present disclosure.

In some cases, a pass-through configuration a WM can implement a pass-through configuration by providing a direct connection between the IO port 116 and serial IO port 119 of the WM. In some examples, a WM can implement a pass-through configuration by re-buffering a received signal from a selected CS source to be passed on to a subsequent WM (e.g., relative to a propagation direction) in a chain of serially connected WMs.

In some implementations, the serial connections between WMs of the first chain of serially connected WMs 110 can be configured in a daisy-chain configuration. As used herein, a "daisy-chain configuration" refers to a configuration in which individual WMs of a chain of serially connected WMs can be configured to override a CS signal (also referred to herein as "clamping" a CS signal) from a selected CS source. In some implementations, a particular WM may override the CS signal from the selected CS source until the particular WM performs an identifier update. In some implementations, after performing an identifier update, the particular WM may be configured to pass-through the CS signal from the selected CS source to a subsequent WM in a chain of serially connected WMs.

In some implementations, the individual WMs of a chain of serially connected WMs may be configured with a forward propagation direction and/or a reverse propagation direction. In some cases, the forward propagation direction and/or reverse propagation direction may be utilized for a pass-through configuration and/or a daisy-chain configuration.

For example, in a "forward propagation" direction for a WM configured in a pass-through configuration, if a logical value (e.g., logical "0" or logical "1") is input at the IO port 116 of a particular WM, the same logical value (e.g., logical "0" or logical "1") can be output at the serial IO port 119 of the particular WM. Similarly, in a "reverse propagation" direction for a WM in a pass-through configuration, if a logical value (e.g., logical "0" or logical "1") is input at the serial IO port 119 of a particular WM, the same logical value (e.g., logical "0" or logical "1") can be output at the IO port 116 of the particular WM.

In one illustrative example, for a forward propagation direction pass-through configuration, the CM 105 may output a CS signal from the CS port 106 which is received at the IO port 116 of the first WM 130 of the first chain of serially connected WMs 110. In some cases, the first WM 130 may be configured to pass-through the CS signal from the serial IO port 119 of the first WM 130 to the IO port 116 of the second WM 140 of the first chain of serially connected WMs 110. Similarly, the second WM 140 may be configured to pass-through the CS signal from the serial IO port 119 of the second WM 140 to the IO port 116 of the third WM 150. In the illustrated example of FIG. 1, the serial IO port 119 of the third WM 150 of the first chain of serially connected WMs 110 is not coupled to the IO port 116 of any other WM of the first chain of serially connected WMs 110. In some examples, the WMs of the second chain of serially connected WMs 120 may similarly be configured in a forward propagation direction pass-through configuration.

In another illustrative example, for a reverse propagation direction pass-through configuration, the third WM 150 of the first chain of serially connected WMs 110 may receive a CS signal at the serial IO port 119 of the third WM 150. In the illustrated example of FIG. 1, the serial IO port 119 of the third WM 150 of the first chain of serially connected WMs 110 is not coupled to the IO port 116 of any other WM of the first chain of serially connected WMs 110. However, in some examples (see, e.g., serial IO port 219 of third WM 250 of FIG. 2A, serial IO port 219 of third WM 280 of FIG. 2A) a logical value may be provided at the serial IO port 119 of the third WM 150 of the first chain of serially connected WMs 110. In some cases, the third WM 150 may be configured to pass-through the CS signal from the IO port 116 of the third WM 150 to the serial IO port 119 of the second WM 140 of the first chain of serially connected WMs 110. Similarly, the second WM 140 may be configured to pass-through the CS signal from the IO port 116 of the second WM 140 to the serial IO port 119 of the first WM 130. In some examples, the WMs of the second chain of serially connected WMs 120 may similarly be configured in a reverse propagation direction pass-through configuration.

As illustrated in FIG. 1, a first WM 130 of the first chain of serially connected WMs 110 includes an IO port 116 coupled to the CS port 106 of the CM 105. In some cases, WMs of the first chain of serially connected WMs 110 can be chained together by connections between a serial IO port 119 of one WM and an IO port 116 of a subsequent WM in the first chain of serially connected WMs 110. For example, as illustrated in FIG. 1, the serial IO port 119 of first WM 130 can be coupled to the IO port 116 of second WM 140 of the first chain of serially connected WMs 110. In some implementations, the serial IO port 119 of second WM 140 can be coupled to the IO port 116 of third WM 150 of the first chain of serially connected WMs 110.

As further illustrated, a first WM 160 of the second chain of serially connected WMs 120 includes an IO port 116 coupled to the CS port 106 of the CM 105. In some cases, WMs of the second chain of serially connected WMs 120 can be chained together by connections between a serial IO port 119 of one WM and an IO port 116 of a subsequent WM in the second chain of serially connected WMs 120. For example, as illustrated in FIG. 1, the serial IO port 119 of first WM 160 can be coupled to the IO port 116 of second WM 170 of the second chain of serially connected WMs 120. In some cases, the serial IO port 119 of second WM 170 can be coupled to the IO port 116 of third WM 180 of the second chain of serially connected WMs 120.

In some cases, the CM 105 can be configured to communicate with the WMs of the first chain of serially connected WMs 110 and the WMs of the second chain of serially connected WMs 120 over a two-wire serial interface using the clock port 101 and the data port 103. In one illustrative example, the CM 105 can communicate with the WMs of the first chain of serially connected WMs 110 and the WMs of the second chain of serially connected WMs 120 according to the mobile industries processor interface (MIPI) system power management interface (SPMI) protocol. In some cases, the CM 105 can communicate with the WMs of the first chain of serially connected WMs 110 and the WMs of the second chain of serially connected WMs 120 according to one or more additional standards that are compatible with and/or developed based on the MIPI SPMI protocol, such as the MIPI radio frequency front-end (RFFE) protocol.

In the illustrated example of FIG. 1, the CS port 106 of the CM 105 is coupled to a corresponding IO port 116 of first WM 130 of the first chain of serially connected WMs 110 and the IO port 116 of the first WM 160 of the second chain of serially connected WMs 120. In some cases, a combiner/divider (not shown) can be utilized for sharing CS port 106 of the CM 105 between the IO port 116 of first WM 130 of the first chain of serially connected WMs 110 and the IO port 116 of the first WM 160 of the second chain of serially connected WMs 120.

In some examples, the WMs of the first chain of serially connected WMs 110 and the WMs of the second chain of serially connected WMs 120 can be implemented as IC chips. In some implementations, the clock port 111, data port 113, IO port 116, and serial IO port 119 can correspond to individual pins of an IC chip of a WM (e.g., a WM of the first chain of serially connected WMs 110 and/or a WM of the second chain of serially connected WMs 120).

In the illustrative example of FIG. 1, the WMs of the first chain of serially connected WMs 110 and the WMs of the second chain of serially connected WMs 120 may be configured as serially connected front-end modules (FEMs) and/or analog beamformers of a phased array antenna system. In some implementations, the WMs of the first chain of serially connected WMs 110 and the WMs of the second chain of serially connected WMs 120 may each be coupled to one or more antenna elements 112 for transmitting and/or receiving radio frequency (RF) signals.

In some cases, the one or more antenna elements 112 may be configured to transmit (Tx) RF signals. In some implementations, the WMs can obtain an RF signal to be transmitted from a RF signal source. In some examples, the CS port 106 of the CM 105 may also function as a functional RF port, such as an RF input/output (RFIO) port, an RF output port (e.g., for a transmit (Tx) only phased array antenna), or the like. While example systems and techniques described herein describe RF signals and RF ports (e.g., RFIO, RF input, and/or RF output ports), it should be understood that the functional ports (e.g., IO ports 116, serial IO port 119) may operate at an intermediate frequency (IF) or analog baseband (BB) frequency without departing from the scope of the present disclosure. In some implementations, the WMs may include circuitry for performing up-conversion and/or down-conversion of RF signals.

In the illustrated example of FIG. 1, an RF signal to be transmitted can be output from the CS port 106 of CM 105 and received at the IO port 116 of the first WM 130 of the first chain of serially connected WMs 110 and the first WM 160 of the second chain of serially connected WMs 120. In some cases, the first WM 130 can include one or more transmit (Tx) components. For example, the one or more transmit (Tx) components may include one or more power amplifiers (PAs) for amplifying the signal to be transmitted and providing an amplified signal to be transmitted to the one or more antenna elements 112. In some cases, the one or more transmit (Tx) components may include phase shifters for applying a phase shift, a time delay, or the like to provide beamforming and beam steering for a phased array antenna. In some examples, the one or more transmit (Tx) components may include frequency up-converters for converting signals from an IF or analog BB frequency to an RF frequency.

In some cases, the antenna elements 112 may be configured to receive (Rx) RF signals. In some implementations, the WMs can obtain an RF signal over-the-air (OTA) from a transmitting device. In some examples, the CS port 106 of the CM 105 may also function as a functional RF port, such as an RFIO port, an RF input port (e.g., for a receive (Rx) only phased array antenna), or the like. In the illustrated example of FIG. 1, an RF signal received by the one or more antenna elements 112 coupled to the first WM 130 of the first chain of serially connected WMs 110 can be output from IO port 116 of the first WM 130 of the first chain of serially connected WMs 110 and received at the CS port 106 of CM 105. In some cases, an RF signal received by the one or more antenna elements 112 coupled to the first WM 160 of the second chain of serially connected WMs 120 can be output from IO port 116 of the first WM 160 of the second chain of serially connected WMs 120 and received at the CS port 106 of CM 105. In some cases, the first WM 130 can include one or more receive (Rx) components (not shown). For example, the one or more receive (Rx) components may include one or more low noise amplifiers (LNAs) for amplifying the received signal(s) from the one or more antenna elements 112 and providing an amplified signal without significantly degrading a signal-to-noise ratio (SNR) of the received signal In some cases, the one or more receive (Rx) components may include phase shifters for applying a phase shift, a time delay, or the like to provide beamforming and beam steering for a phased array antenna. In some examples, the (Rx) components may include frequency down-converters for converting from an RF frequency to an IF or analog BB frequency.

In some implementations, the serial IO port 119 of the third WM 150 of the first chain of serially connected WMs 110 may be terminated by a termination 152. In some implementations, one or more electrical components (not shown) included in the third WM 150 of the first chain of serially connected WMs 110 coupled to the serial IO port 119 of the third WM 150 may be disabled and/or terminated. In some implementations, the serial IO port 119 of the third WM 180 of the second chain of serially connected WMs 120 may be terminated by a termination 182. In some implementations, one or more electrical components (not shown) included in the third WM 180 of the second chain of serially connected WMs 120 coupled to the serial IO port 119 of the third WM 180 may be disabled and/or terminated.

FIG. 2A illustrates an example configuration 200 including two serially connected chains of WMs coupled to a common CS port 206 of a CM 205. In the example configuration 200 of FIG. 2A, a CM 205 includes a CS port 206, CLK port 201, and a DATA port 203. As illustrated, the CS port 206 of the CM 205 is coupled to an IO port 216 of first WM 230 of a first chain of serially connected WMs 210 and an IO port 216 of a first WM 260 of a second chain of serially connected WMs 220. In some cases, a combiner/splitter (not shown) may be disposed between the CS port 206 and the IO ports 216 of the first WM 230 and the first WM 260. For example, a Wilkinson combiner/splitter (not shown) may be disposed between the CS port 206 and the IO ports 216 of the first WM 230 of the first chain of serially connected WMs 210 and the first WM 260 of the second chain of serially connected WMs 220.

In the illustrated example of FIG. 2A, individual WMs of the first chain of serially connected WMs 210 and the second chain of serially connected WMs 220 can communicate with CM 205 over a two-wire serial communication interface. In some cases, data ports 213 of the individual WMs of the first chain of serially connected WMs 210 and the second chain of serially connected WMs 220 can be coupled to DATA port 203 of the CM 205. Similarly, the clock ports 211 of the individual WMs of the first chain of serially connected WMs 210 and the second chain of serially connected WMs 220 can be coupled to the CLK port 201 of the CM 205.

In the illustrative example of FIG. 2A, the first chain of serially connected WMs 210 and the second chain of serially connected WMs 220 can correspond to FEMs and/or analog beamformers of a phased array antenna system. However, as noted above, it should be understood that the systems and techniques described herein are not limited to use in phased array antenna systems, beamformers, FEMs, and/or any combination thereof. For example, the WMs of the first chain of serially connected WMs 210 and/or the WMs of the second chain of serially connected WMs 220 may include any type of serially connected circuitry.

In some cases, each individual WM of the first chain of serially connected WMs 210 and/or each individual WM of the second chain of serially connected WMs 220 may be coupled to one or more antenna elements 212. In some cases, the one or more antenna elements 212 may be similar to and perform similar functions to the one or more antenna elements 112 of FIG. 1.

FIG. 2B through FIG. 2F illustrate an example enumeration sequence utilizing simultaneous reverse propagation for distinguishing between the first chain of serially connected WMs 210 and the second chain of serially connected WMs 220 coupled to the common CS port 206 of the CM 205 of FIG. 2A. In some implementations, identifier values for the first chain of serially connected WMs 210 and the second chain of serially connected WMs 220 can be updated based on a series of identifier update command sets. In some cases, an identifier update command set can include one or more serial commands transmitted over the two-wire interface (e.g., CLK port 201 and DATA port 203) of the CM 205 to the clock ports 211 and data ports 213 of all of the WMs of the first chain of serially connected WMs 210 and the second chain of serially connected WMs 220.

In some implementations, an identifier update command set can include a CS source and an identifier update value. In some cases, updating the identifier values for every individual WM of the first chain of serially connected WMs 210 and every individual WM of the second chain of serially connected WMs 220 can be enabled based on the selected CS source. Additionally or alternatively, an enable signal may be utilized to control whether a WM is configured to allow identifier value updates.

In some examples, an identifier update value can be utilized to increment (or decrement) an identifier for one or more WMs during an iterative identifier update. In some cases, the identifier update value can represent an increment for updating identifier values of selected (e.g., based on the CS source) WMs. In some examples, the identifier update value can replace an existing identifier value of selected WMs.

FIG. 2B through FIG. 2F illustrate an example enumeration sequence (e.g., an iterative identifier update) utilizing simultaneous reverse propagation for distinguishing between the first chain of serially connected WMs 210 and the second chain of serially connected WMs 220 coupled to the common CS port 206 of the CM 205 of FIG. 2A. In some implementations, identifier values for the first chain of serially connected WMs 210 and the second chain of serially connected WMs 220 can be updated based on a series of identifier update command sets. In some cases, an identifier update command set can include one or more serial commands transmitted over the two-wire interface (e.g., CLK port 201 and DATA port 203) of the CM 205 to the clock ports 211 and data ports 213 of all of the WMs of the first chain of serially connected WMs 210 and the second chain of serially connected WMs 220.

In some implementations, an identifier update command set can include a CS source and an identifier update value. In some cases, updating the identifier values for every individual WM of the first chain of serially connected WMs 210 and every individual WM of the second chain of serially connected WMs 220 can be enabled based on the selected CS source. Additionally or alternatively, an enable signal may be utilized to control whether a WM is configured to allow identifier value updates.

In some examples, an identifier update value can be utilized to increment (or decrement) an identifier for one or more WMs during an iterative identifier update. In some cases, the identifier update value can represent an increment for updating identifier values of selected (e.g., based on the CS source) WMs. In some examples, the identifier update value can replace an existing identifier value of selected WMs.

FIG. 2B illustrates a first identifier update that assigns an identifier value of "1" to every individual WM of the first chain of serially connected WMs 210 and every individual WM of the second chain of serially connected WMs 220. In one illustrative example, the first identifier update can be initiated by a first identifier update command set transmitted to each WM of the first chain of serially connected WMs 210 and each WM of the second chain of serially connected WMs 220.

In some implementations, the WMs of the first chain of serially connected WMs 210 and the WMs of the second chain of serially connected WMs 220 may be configured to operate in a pass-through configuration with a forward propagation direction in response to the first identifier update command set.

In some cases, the first identifier update command set can include a CS source selection. In one illustrative example, a signal present at the CS port 206 of the CM 205 can provide the CS signal for the first identifier update. For example, the CS source selection included in the first identifier update command set can correspond to the IO ports 216 of the WMs of the first chain of serially connected WMs 210 and/or the IO ports 216 of the WMs of the second chain of serially connected WMs 220. As shown in FIG. 2A, the IO port 216 of the first WM 230 and the IO port 216 of the first WM 260 can be coupled to the CS port 206 of the CM 205. In some cases, when the first WM 230 and/or the first WM 260 are configured to propagate the CS source in a forward propagation pass-through mode, the signal at the CS port 206 of the CM 205 may be propagated through the WMs of the first chain of serially connected WMs 210 and the WMs of the second chain of serially connected WMs 220. Accordingly, the signal at CS port 206 of the CM 205 may act as a CS signal for the first WM 230 of the first chain of serially connected WMs 210, the second WM 240 of the first chain of serially connected WMs 210, the third WM 250 of the first chain of serially connected WMs 210, the first WM 260 of the second chain of serially connected WMs 220, the second WM 270 of the second chain of serially connected WMs 220, and/or the third WM 280 of the second chain of serially connected WMs 220.

In some examples, a signal transmitted from the CS port 206 of the CM 205 may be obtained at the IO port 216 of the first WM 230 of the first chain of serially connected WMs 210. In some examples, the first WM 230 may be configured to pass-through the CS signal from the serial IO port 219 of the first WM 230 to the IO port 216 of the second WM 240 of the first chain of serially connected WMs 210. In some cases, the second WM 240 may be configured to pass-through the CS signal from the serial IO port 219 of the second WM 240 to the IO port 216 of the third WM 250 of the first chain of serially connected WMs 210.

In some implementations, a signal transmitted from the CS port 206 of the CM 205 may be obtained at the IO port 216 of the first WM 260 of the second chain of serially connected WMs 220. In some examples, the first WM 260 may be configured to pass-through the CS signal from the serial IO port 219 of the first WM 260 to the IO port 216 of the second WM 270 of the second chain of serially connected WMs 220. In some cases, the second WM 270 may be configured to pass-through the CS signal from the serial IO port 219 of the second WM 270 to the IO port 216 of the third WM 280 of the second chain of serially connected WMs 220.

In some implementations, the first identifier update command set can include an identifier update value. In one illustrative example, the identifier value 222 and the identifier value 224 may be initialized to a value of "0" and the first identifier update value included in the first identifier update command set can have a value of "1." Accordingly, after the WMs of the first chain of serially connected WMs 210 and the WMs of the second chain of serially connected WMs 220 perform an identifier update based on the first identifier update value, the values of the identifier value 222 and the identifier value 224 can be updated to "1." As illustrated in FIG. 2A, the identifier value 222 for each WM of the first chain of serially connected WMs 210 has a value of "1" after the identifier update. Similarly, the identifier value 224 for each WM of the second chain of serially connected WMs 220 has a value of "1" after the identifier update.

FIG. 2C illustrates a second identifier update that assigns a value of "2" to each individual WM of the second chain of serially connected WMs 220. In one illustrative example, the second identifier update can be initiated by a second identifier update command set. In the illustrated example of FIG. 2C, the second identifier update command set can include one or more serial commands transmitted over the two-wire interface (e.g., CLK port 201 and DATA port 203) of the CM 205 to the clock ports 211 and data ports 213 of all of the WMs of the first chain of serially connected WMs 210 and the second chain of serially connected WMs 220.

In some cases, the serial IO ports 219 of the WMs of the first chain of serially connected WMs 210 and/or the serial IO ports 219 of the third WM 280 of the second chain of serially connected WMs 220 may be used as a CS source. In some implementations, the serial IO port 219 of the third WM 250 of the first chain of serially connected WMs 210 may be coupled to a CS signal (e.g., a ground (GND) signal, a logical "0," or the like). In some examples, the serial IO port 219 of the third WM 280 of the second chain of serially connected WMs 220 may be coupled to an additional CS signal (e.g., a VCC signal, a logical "1," or the like).

In some examples, the WMs of the first chain of serially connected WMs 210, in response to the second identifier update command set, may be configured to pass-through a CS signal (e.g., from the serial IO port 219 of the third WM 250 of the first chain of serially connected WMs 210) to all of the WMs of the first chain of serially connected WMs 210 in a reverse propagation direction.

For example, the third WM 250 of the first chain of serially connected WMs 210 may be configured to pass-through a CS signal (e.g., a ground (GND) signal, a logical "0," or the like) from the IO port 216 of the third WM 250 to the serial IO port 219 of the second WM 240 of the first chain of serially connected WMs 210. In some implementations, a GND signal may be provided to the serial IO port 219 of the third WM 250 by a termination to a ground potential. In some cases, a GND signal may be provided to the serial IO port 219 by a pull-down resistor coupled to the serial IO port 219 and included in the third WM 250. In turn, the second WM 240 may pass the CS signal (e.g., GND) from the IO port 216 of the second WM 240 to the serial IO port 219 of the first WM 230 of the first chain of serially connected WMs 210.

In some cases, the WMs of the second chain of serially connected WMs 220, in response to the second identifier update command set, may be configured to pass-through a CS signal (e.g., from the serial IO port 219 of the third WM 280 of the second chain of serially connected WMs 220) to all of the WMs of the second chain of serially connected WMs 220 in a reverse propagation direction.

For example, the third WM 280 of the second chain of serially connected WMs 220 may pass a CS signal (e.g., a VCC signal, a logical "1," or the like) from the IO port 216 of the third WM 280 to the serial IO port 219 of the second WM 270 of the second chain of serially connected WMs 220. In some implementations, a VCC signal may be provided to the serial IO port 219 of the third WM 280 by a termination to a VCC potential. In some cases, a VCC signal may be provided to the serial IO port 219 of the third WM 280 by a pull-up resistor coupled to the serial IO port 219 and included in the third WM 280. In some cases, the second WM 270 may pass the CS signal (e.g., VCC) from the IO port 216 of the second WM 270 to the serial IO port 219 of the first WM 260 of the second chain of serially connected WMs 220.

In some cases, the CS signal (e.g., a VCC signal, a logical "1," or the like) can correspond to an active state of the selected CS source (e.g., an active CS signal state). Accordingly, the WMs of the second chain of serially connected WMs 220 may perform identifier updates in response to the second pass-through identifier update command set.

Referring to FIG. 2C, the WMs of the second chain of serially connected WMs 220 may obtain a second identifier update value that can be used to update identifier values WMs of the second chain of serially connected WMs 220.

For example, as illustrated in FIG. 2C, an identifier value 234 for the WMs of the second chain of serially connected WMs 220 may be updated to a value of "2." In some cases, the identifier value 234 can be obtained by incrementing the identifier value 224 (e.g., a value of "1") by the second identifier update value of "1."

The identifier updates of FIG. 2B and FIG. 2C can be examples of pass-through identifier update command sets. As used herein, pass-through identifier update command sets refer to update command sets in which a CS signal is common to each WM of a chain of serially connected WMs and a common identifier update value is applied to each WM of the chain of serially connected WMs for which the CS signal is activated. In some cases, the propagation of CS signals in the direction from serial IO port 219 of a WM to serial IO port 219 of an adjacent WMs (e.g., moving toward the direction of the CM 205 of FIG. 2A) can be referred to as "reverse propagation." In some examples, a configuration that utilizes reverse propagation to pass-through a CS signal to all of the WMs of a chain of serially connected WMs may be referred to as a "simultaneous reverse propagation" configuration.

FIG. 2D through FIG. 2F illustrate an example of a forward propagation daisy-chain identifier update sequence. In some implementations, a daisy-chain identifier update can be utilized to assign unique identifier values to each individual WM of the first chain of serially connected WMs 210 and/or each individual WM of the second chain of serially connected WMs 220 in a sequential manner. In some cases, sequentially assigning unique identifier values to each individual WM of the first chain of serially connected WMs 210 and/or each individual WM of the second chain of serially connected WMs 220 can be used in place of additional CS sources that would otherwise be required to separately select the individual WMs. In contrast to the pass-through identifier update command sets of FIG. 2B and FIG. 2C, a daisy-chain identifier update sequence may result in different identifier update values being applied to the identifiers of each WM of a chain of serially connected WMs.

In some implementations, the daisy-chain identifier update command set may be associated with a CS source. In one illustrative example, the CS source can be selected as the IO port 216 of each WM. For example, the first WM 230 of the first chain of serially connected WMs 210 and the first WM 260 of the second chain of serially connected WMs 220 may each respectively receive a CS signal from the CS port 206 of the CM 205 at the IO ports 216.

In the examples of FIG. 2D through FIG. 2F, the daisy-chain identifier update sequence can be initiated by a daisy-chain identifier update command set. In some implementations, in response to receiving the daisy-chain identifier update command set, the first WM 230 of the first chain of serially connected WMs 210 can enable an identifier update for the first WM 230. In some implementations, in response to receiving the daisy-chain identifier update command set, the first WM 230 of the first chain of serially connected WMs 210 can disable an identifier update for the second WM 240 and/or third WM 250 of the first chain of serially connected WMs 210.

Similarly, in response to receiving the daisy-chain identifier update command set, the first WM 260 of the second chain of serially connected WMs 220 can enable an identifier update for the first WM 260. In addition, in response to receiving the daisy-chain identifier update command set, the first WM 260 of the second chain of serially connected WMs 220 can disable an identifier update for the second WM 270 and/or third WM 280 of the second chain of serially connected WMs 220.

In some examples, the first WM 230 of the first chain of serially connected WMs 210 may disable an identifier update for the second WM 240 and/or third WM 250 of the first chain of serially connected WMs 210 by disabling (e.g., overriding) a pass-through of a CS signal from the first WM 230 to the second WM 240. For example, the first WM 230 of the first chain of serially connected WMs 210 may obtain a CS signal at the IO port 216 of the first WM 230. In some implementations, the first WM 230 of the first chain of serially connected WMs 210 may override the CS signal obtained at the IO port 216 of the first WM 230 and output a modified CS signal from the serial IO port 219 of the first WM 230 to the IO port 216 of the second WM 240 of the first chain of serially connected WMs 210. In some cases, the second WM 240 of the first chain of serially connected WMs 210 may be configured to output an additional modified CS signal from the serial IO port 219 of the second WM 240 of the first chain of serially connected WMs 210 to the IO port 216 of the third WM 250 of the first chain of serially connected WMs 210.

In some examples, the WMs of the second chain of serially connected WMs 220 may similarly override pass-through of the CS signal received at the IO port 216 of the first WM 260 of the second chain of serially connected WMs 220 through the WMs of the second chain of serially connected WMs 220.

Referring to FIG. 2D, the WMs of the first chain of serially connected WMs 210 and the WMs of the second chain of serially connected WMs 220 may obtain a first sequential identifier update value that can be used to update identifier values of the first WM 230 of the first chain of serially connected WMs 210 and the first WM 260 of the second chain of serially connected WMs 220.

For example, as illustrated in FIG. 2D, an identifier value 242 for the first WM 230 of the first chain of serially connected WMs 210 may be updated to a value of "3." In some cases, the identifier value 242 can be obtained by incrementing the identifier value 232 (e.g., a value of "1") by a first sequential identifier update value of "2." In some cases, upon updating the identifier value 242 for the first WM 230 of the first chain of serially connected WMs 210, the first WM 230 can disable additional identifier updates associated with the daisy-chain identifier update. In some cases, upon updating the identifier value 242, the first WM 230 of the first chain of serially connected WMs 210 can be configured to enable identifier updates for the second WM 240 of the first chain of serially connected WMs 210.

In one illustrative example, an identifier value 244 for the first WM 260 of the second chain of serially connected WMs 220 may be updated to a value of "4." In some cases, the identifier value 244 can be obtained by incrementing the identifier value 234 (e.g., a value of "2") by the first sequential identifier update value of "2." In some cases, upon updating the identifier value 244 for the first WM 260 of the second chain of serially connected WMs 220, the first WM 260 can disable additional identifier updates associated with the daisy-chain identifier update. In some cases, upon updating the identifier value 244, the first WM 260 of the second chain of serially connected WMs 220 can be configured to enable identifier updates for the second WM 270 of the second chain of serially connected WMs 220.

Referring to FIG. 2E, the WMs of the first chain of serially connected WMs 210 and the WMs of the second chain of serially connected WMs 220 may obtain a second sequential identifier update value that can be used to update identifier values of the second WM 240 of the first chain of serially connected WMs 210 and the second WM 270 of the second chain of serially connected WMs 220.

For example, as illustrated in FIG. 2E, an identifier value 252 for the second WM 240 of the first chain of serially connected WMs 210 may be updated to a value of "5." In some cases, the identifier value 252 can be obtained by incrementing the identifier value 232 (e.g., a value of "1") by a second sequential identifier update value of "4." In some cases, upon updating the identifier value 252 for the second WM 240 of the first chain of serially connected WMs 210, the second WM 240 can disable additional identifier updates associated with the daisy-chain identifier update. In some cases, upon updating the identifier value 252, the second WM 240 of the first chain of serially connected WMs 210 can be configured to enable identifier updates for the third WM 250 of the first chain of serially connected WMs 210.

In one illustrative example, an identifier value 254 for the second WM 270 of the second chain of serially connected WMs 220 may be updated to a value of "6." In some cases, the identifier value 254 can be obtained by incrementing the identifier value 234 (e.g., a value of "2") by the second sequential identifier update value of "4." In some cases, upon updating the identifier value 254 for the second WM 270 of the second chain of serially connected WMs 220, the second WM 270 can disable additional identifier updates associated with the daisy-chain identifier update. In some cases, upon updating the identifier value 254, the second WM 270 of the second chain of serially connected WMs 220 can be configured to enable identifier updates for the third WM 280 of the second chain of serially connected WMs 220.

Referring to FIG. 2F, the WMs of the first chain of serially connected WMs 210 and the WMs of the second chain of serially connected WMs 220 may obtain a third sequential identifier update value that can be used to update identifier values of the third WM 250 of the first chain of serially connected WMs 210 and the third WM 280 of the second chain of serially connected WMs 220. For example, as illustrated in FIG. 2F, an identifier value 262 for the third WM 250 of the first chain of serially connected WMs 210 may be updated to a value of "7." In some cases, the identifier value 262 can be obtained by incrementing the identifier value 232 (e.g., a value of "1") by the third sequential identifier update value of "6." In one illustrative example, an identifier value 254 for the third WM 280 of the second chain of serially connected WMs 220 may be updated to a value of "6." In some cases, the identifier value 264 can be obtained by incrementing the identifier value 234 (e.g., a value of "2") by the third sequential identifier update value of "6."

FIG. 3A illustrates an example block diagram of a WM 300 configuration that can be utilized for assigning unique identifiers, detecting connection failures, and/or repairing unique identifiers for WMs included in chains of serially connected WMs. In the illustrated example of FIG. 3A, the WM 300 includes a CS source select block 302, an enable update block 310, and an identifier update module 330.

In the example of FIG. 3A, the WM 300 includes a serial interface 305 for serial communication. In one illustrative example, the serial interface 305 may be implemented as a two-wire serial interface. In some cases, the serial interface 305 may be configured to receive commands from a CM (e.g., CM 105 of FIG. 1). In some examples, the commands received by the WM 300 over the serial interface 305 may include identifier update command sets. For example, the identifier update command sets may include pass-through identifier commands (e.g., forward-propagation pass-through commands, reverse propagation pass-through commands) and/or sequential identifier update command sets (e.g., forward propagation daisy-chain identifier update command sets, reverse propagation daisy-chain identifier update command sets).

In some cases, the identifier update command sets obtained by the WM 300 over the two-wire interface may include a CS source selection. In some cases, the CS source selection can be stored in a register (e.g., a CS source register), memory, and/or any other suitable storage. In some cases, the CS source selection included in an identifier update command set may be provided as a select input 312 to the CS source select block 302.

As illustrated in FIG. 3A, the CS source select block 302 may have N number of CS inputs 314 (e.g., CS1, CS2, through CSN), where N is an integer. In some cases, a value of the select input 312 can be used to select a particular CS input 314 with index equal to the select input 312 value. In some implementations, the CS input 314 selected by the select input 312 may be output to the CS output 328 of the CS source select block 302.

As illustrated in FIG. 3A, some CS inputs 314 may be static values such as a low voltage (e.g., a logical "0") and a high voltage (e.g., a logical "1"). In some cases, static values for the CS input 314 may be used to perform identifier updates across all of the WMs coupled to the serial interface 305 simultaneously and/or to prevent identifier updates across all of the WMs coupled to the 305. As further illustrated in FIG. 3A, one or more of the CS input 314 may be provided by a failure module 352. In some cases, the failure module 352 can be utilized to detect connection faults in serial connections between WMs of a chain of serially connected WMs and/or serial communication failures between WMs and a CM (e.g., CM 205 of FIG. 2A) over the serial interface 305. In some implementations, the failure module 352 may receive control signals 351 for controlling various functions of the failure module 352. In some examples, the failure module 352 may be coupled to the CS output 328 of the CS source select block 302 to allow for the failure module 352 to detect a value of the currently selected CS input 314 for the WM 300.

In some cases, the CS inputs 314 can be coupled to one or more signals available to a WM (e.g., WMs of the first chain of serially connected WMs 110, WMs of the second chain of serially connected WMs 120 of FIG. 1). In some cases, the one or more signals available to the WM may include signal present at functional interfaces of the WM. In one illustrative example, a particular CS input of the CS inputs 314 may be coupled to an IO port (e.g., IO ports 116 of FIG. 1) of a WM (e.g., a WM of the first chain of serially connected WMs 110, a WM of the second chain of serially connected WMs 120 of FIG. 1). In another illustrative example, a CS input of the CS inputs 314 may be coupled to a serial IO port (e.g., serial IO port 119 of FIG. 1) of a WM (e.g., a WM of the first chain of serially connected WMs 110, a WM of the second chain of serially connected WMs 120 of FIG. 1).

In some implementations, a CS input 314 may be derived from one or more signals available to the WM. For example, one or more signals available to the WM may be combined by digital logic and the output of the digital logic may be coupled to one of the CS inputs 314. In another illustrative example, a frequency, phase, amplitude, and/or any other characteristic of one or more signals available to the WM may be used to derive a signal that is connected to the CS inputs 314. In one illustrative example, a CS input 314 may be coupled to a signal that becomes active when a frequency of a signal received at the IO port (e.g., IO port 116 of FIG. 1) of a WM matches a target frequency value and/or target frequency range.

In some cases, the CS inputs 314 may be coupled to and/or derived from functional interfaces of the WM. As used herein, a functional interface refers to any signal available to the WM that is used by the WM for functionality other than and/or in addition to the generation of CS inputs 314.

In some implementations, the WM 300 may include an enable update block 310 that can be utilized to selectively enable or disable identifier updates by the WM 300. For example, the enable update block 310 may be utilized to prevent identifier updates after a unique identifier enumeration operation is completed. In one illustrative example, the enable update block 310 may be utilized during processing of a sequential identifier update command set by WMs of a chains of serially connected WMs (e.g., first chain of serially connected WMs 110, the second chain of serially connected WMs 120 of FIG. 1). For example, after a first WM of a chain of serially connected WMs (e.g., first WM 230 of first chain of first chain of serially connected WMs 210 of FIG. 2A) performs an identifier update associated with a daisy-chain identifier update command set, the first WM may utilize the enable update block 310 to disable further identifier updates to the first WM while additional WMs (e.g., second WM 240 of first chain of first chain of serially connected WMs 210 and/or third WM 250 of first chain of first chain of serially connected WMs 210 of FIG. 2A) obtain identifier updates associated with the daisy-chain identifier update command set.

In some cases, an enable signal 320 can be provided as an input to the enable update block 310. In some cases, the enable signal 320 may be generated by additional circuitry (not shown) that may include logic for determining when a particular WM has completed an identifier update associated with a daisy-chain identifier update command set.

As shown in FIG. 3A, identifier update module 330 may obtain an enable output 307 of the enable update block 310. In addition, an identifier update value 316 is provided as an input to the identifier update module 330. In some cases, the identifier update value 316 can correspond to an identifier update value included in an identifier update command set received over the serial interface 305. In some cases, the identifier update value can be stored in a register (e.g., a command register), buffer, memory, and/or any other suitable storage. In some implementations, the identifier update module 330 may be coupled to a unique identifier register 338 of the WM 300. In some cases, the identifier update module 330 may be coupled to the unique identifier register 338 by a bidirectional interface 321. In some examples (not shown), the identifier update module 330 may be coupled to the unique identifier register 338 by a uni-directional (e.g., write only) interface.

In some implementations (not shown), WMs may be configurable to perform identifier updates associated with daisy-chain identifier update command sets without the use of an enable update block 310. For example, each WM of a chain of serially connected WMs (e.g., WMs of first chain of serially connected WMs 110 of FIG. 1, WMs of second chain of serially connected WMs 120 of FIG. 1) may be configured to output a disabled state of a CS signal from a serial IO port (e.g., serial IO port 119 of FIG. 1) to an IO port of a subsequent WM in the chain of serially connected WMs in response to obtaining a daisy-chain identifier update command set. In some cases, an IO port (e.g., IO port 116 of FIG. 1) can be selected CS signal as a CS source for the WMs of the chain of serially connected WMs. In some cases, a first WM of a chain of serially connected WMs having an activated CS source may perform an identifier update based on a first sequential identifier update value. In some examples, the identifier update by the first WM of the chain of serially connected WMs may be followed by a unicast command to the newly-assigned identifier value for the first WM instructing the first WM to pass-through the CS signal from the IO port of a particular WM to the serial IO port of the WM and to forego unique identifier updates until the particular WM obtains an additional identifier update command set. For example, after the first WM of a chain of serially connected WMs (e.g., first WM 230 of first chain of first chain of serially connected WMs 210 of FIG. 2D) performs an identifier update, the following command to pass-through the CS signal from the IO port of the first WM to the serial IO port 219 of the first WM would enable identifier updates by a second WM of the chain of serially connected WMs (e.g., second WM 240 of the first chain of first chain of serially connected WMs 210 of FIG. 2E). In some examples, after a particular WM performs an identifier update as part of a daisy-chain identifier update command set, the particular WM may automatically reconfigure itself to pass-through the CS signal and to forego additional unique identifier updates until receiving an additional identifier update command set. In some implementations, a similar process may be repeated to sequentially update the identifiers of each WM of a chain of serially connected WMs without the use of an enable update block 310.

FIG. 3B illustrates an example configuration 350 for the failure module 352 of FIG. 3A. In the illustrated example of FIG. 3B, the failure module 352 includes failure logic 356. In some cases, the failure logic 356 can be controlled by one or more failure module control signals 351. In some cases, the failure module 352 can be coupled to functional interfaces of a WM, such as a CS port 366 (e.g., IO port 116 of FIG. 1) and a serial CS port 369 of the WM (e.g., serial IO port 119 of FIG. 1). In some cases, the functional interfaces of the WM may also include a bidirectional buffer 354 disposed between the CS port 366 and the serial CS port 369 of the WM. In the example of FIG. 3B, the failure module 352 includes pull-up/pull-down circuitry 355 disposed on either side of the bidirectional buffer 354. For example, first pull-up/pull-down circuitry 355 can be disposed between the CS port 366 and the bidirectional buffer 354 and second pull-up/pull-down circuitry 355 can be disposed between the serial CS port 369 and the bidirectional buffer 354. In some cases, the bidirectional buffer 354 can be configured to drive a low voltage level (e.g., a logical "0") or a high voltage level (e.g., a logical "1") in the propagation direction. For example, as described above, the bidirectional buffer 354 may be utilized to override a CS signal during execution of a daisy-chain identifier update command set.

In some cases, failure logic 356 may be configured to control the operation of the pull-up/pull-down circuitry 355 of the failure module 352. For example, the failure logic 356 may be configured to open and/or close switches to enable or disable pull-up functionality or pull-down functionality of the pull-up/pull-down circuitry 355. In some implementations, the failure logic 356 may optionally obtain the CS output 328 from the CS source select block 302. In some examples, the pull-up/pull-down circuitry 355 of the failure module 352 can be utilized as part of failure detection and/or failure recovery processes as described herein. In addition, the failure module 352 may be coupled to the CS source select block 302 and may provide CS inputs 314 that can be selected for use during failure detection and/or failure recovery processes.

FIG. 4A illustrates a configuration 400 for detecting a failure of a CS port (e.g., IO port 116 of FIG. 1, CS port 366 of FIG. 3B) and/or a serial CS port (e.g., serial IO port 119 of FIG. 1, serial CS port 369 of FIG. 3B) of a WM included in a chain of serially connected WMs 410 is shown. As illustrated, the chain of serially connected WMs 410 can include a first WM 430, a second WM 440, and a third WM 450 connected serially. In the example configuration 400 of FIG. 4A, a CLK port 401 and a DATA port 403 of a CM 405 can be coupled to respective clock ports 411 and data ports 413 of the first WM 430, second WM 440, and third WM 450 of the chain of serially connected WMs 410. In one illustrative example, the CM 405 and the WMs of the chain of serially connected WMs 410 can communicate over a two-wire serial interface. In one illustrative example, the two-wire serial interface can be compatible with the MIPI RFFE protocol. In some cases, the chain of serially connected WMs 410 can be similar to and perform similar functions to the first chain of serially connected WMs 210 of FIG. 2A.

In the example of FIG. 4A, one or more serial connections between "A" CS ports (e.g., IO port 116 of FIG. 1, CS ports 366 of FIG. 3A) and "B" serial CS ports (e.g., serial IO port 119 of FIG. 1, serial CS port 369 of FIG. 3A) of the WMs in the chain of serially connected WMs 410 may have a faulty operation. For example, the one or more connections may have a stuck high (e.g., stuck at "1"), stuck low (e.g., stuck at "0"), or open circuit fault. In the illustrated example of FIG. 4A, a serial connection failure 435 is present between serial CS port B1 of first WM 430 and CS port A2 of second WM 440.

FIG. 4B is a state diagram illustrating an example failure detection process 470 for detecting connection failures between WMs of the chain of serially connected WMs 410 the configuration 400 of FIG. 4A. For example, the failure detection process 470 may be used to detect the connection failure 435 of FIG. 4A.

At step 472 of the failure detection process 470, identifier values for the first WM 430, second WM 440, and third WM 450 can be initialized to a value of zero (0). In some cases, at various steps of the failure detection process 470, the identifier value of each WM may be modified depending on whether or not a fault is present. In some implementations, the final identifier value assigned to a particular WM of the chain of serially connected WMs 410 can represent the particular type of fault(s) present in the connections of the corresponding WM.

At step 474 of the failure detection process 470, the "A" CS ports (e.g., CS port A1, CS port A2, CS port A3) of the WMs of the chain of serially connected WMs 410 can be coupled to a weak pull-up voltage at a high voltage level (e.g., a logical "1"). In addition, the first WM 430, the second WM 440, and the third WM 450 may be configured in a forward propagation direction. For example, the "A", of the first WM 430, the second WM 440, and the third WM 450, respectively, can be configured in an input configuration and the "B" serial CS ports (e.g., serial CS port B1, serial CS port B2, serial CS port B3) of the first WM 430, the second WM 440, and the third WM 450, respectively, can be configured in an output configuration. The "B" serial CS ports may also be configured to drive a low voltage level (e.g., a logical "0") that is stronger than the weak pull-up voltage at the "A" CS ports. Accordingly, if a proper connection is present between a "B" port of a WM (e.g., serial CS port B1 of first WM 430) and an "A" port of a subsequent WM (e.g., CS port A2 of second WM 440), then the result should be a low voltage level present at the A port of the subsequent WM.

At step 475 of the failure detection process 470, if the signal at the A port of a particular WM has a value of one (1), then the corresponding identifier can be incremented by one (1). As noted above, the expected voltage level at each of the "A" CS ports after configuration at step 474 when properly serially connected is a low voltage level. Accordingly, step 475 will result in an identifier of a WM being updated only when a proper connection is not present between a "B" port of a WM (e.g., serial CS port B1 of first WM 430) and an "A" port of a subsequent WM (e.g., CS port A2 of second WM 440). In some cases, an improper connection that results in a high voltage level can correspond to an open circuit where the pull-up voltage provides the high voltage level. In some examples, a "B" port output stuck at a high voltage level may provide the high voltage level for the faulty connection.

At step 476 of the failure detection process 470, the identifier values for the WMs of the chain of serially connected WMs 410 may be incremented by two (2). In the presence of proper serial connections between WMs of the chain of serially connected WMs 410, the increment of 2 may be subtracted as a result of a subsequent step of the failure detection process 470. However, if a faulty connection is present, the increment of 2 may not be subtracted, which can be indicative of a failure in a connection between a "B" port of a WM (e.g., serial CS port B1 of first WM 430) and an "A" port of a subsequent WM (e.g., CS port A2 of second WM 440).

At step 478 of the failure detection process 470, the "A" CS ports (e.g., CS port A1, CS port A2, CS port A3) of the WMs of the chain of serially connected WMs 410 can be coupled to a weak pull-down voltage at a low voltage level (e.g., a logical "0"). In addition, the first WM 430, the second WM 440, and the third WM 450 may be configured in a forward propagation direction. For example, the "A" CS ports (e.g., CS port A1, CS port A2, CS port A3), of the first WM 430, the second WM 440, and the third WM 450, respectively, can be configured in an input configuration and the "B" serial CS ports (e.g., serial CS port B1, serial CS port B2, serial CS port B3) of the first WM 430, the second WM 440, and the third WM 450, respectively, can be configured in an output configuration. The "B" serial CS ports may also be configured to drive a high voltage level (e.g., a logical "1") that is stronger than the weak pull-down voltage at the "A" CS ports. Accordingly, if a proper connection is present between a "B" port of a WM (e.g., serial CS port B1 of first WM 430) and an "A" port of a subsequent WM (e.g., CS port A2 of second WM 440), then the result should be a high voltage level present at the A port of the subsequent WM.

At step 479 of the failure detection process 470, if the signal at the A port of a particular WM has a value of one (1), then the corresponding identifier can be decremented by two (2). As noted above, the expected voltage level at each of the "A" CS ports after being configured at step 478 when properly serially connected is a low voltage level. Accordingly, step 479 will result in an identifier of a WM being incremented by two (2) in aggregate after step 476 through step 479 only when a proper connection is not present between a "B" port of a WM (e.g., serial CS port B1 of first WM 430) and an "A" port of a subsequent WM (e.g., CS port A2 of second WM 440). In some cases, an improper connection that results in a high voltage level can correspond to an open circuit where the pull-down voltage provides the low voltage level. In some examples, a "B" port output stuck at a low voltage level may provide the low voltage level for the faulty connection.

At step 480 of the failure detection process 470, the final identifier values of the WMs of the chain of serially connected WMs 510 can be checked to determine whether any faults are present at the serial connections between the WMs. For example, a final identifier value of one (one) for a WM may indicate a stuck at one (1) fault, a final identifier value of two (2) for a WM may indicate a stuck at zero (0) fault, and a final identifier value of three (3) for a WM may indicate an open circuit fault. In some cases, a flag or other indicator can be stored by the WM based on the type of connection failure detected at a particular WM. In some cases, the flag can be used to operate the WM in a partially functional state despite the presence of a connection failure.

In some cases, the WMs of a chain of serially connected WMs may include two or more serially connected signal paths. For example, a first serially connected signal path may correspond to a first data beam and the second serially connected signal path may correspond to a second signal beam for a phased array antenna system, where the WMs may be FEMs of the phased array antenna systems. In some implementations, a failure detection process may be performed for each serially connected signal path to determine whether connection failures are present. In one illustrative example, a WM that includes a connection failure for one serially connected signal path (e.g., a first data beam) may be configured to operate normally for any remaining serially connected signal paths (e.g., a second data beam and/or additional data beams) while remaining inoperative for the first data beam.

It should be understood that the failure detection process 470 of FIG. 4B provides only one example technique for detecting a connection failure between serially connected WMs in a chain of serially connected WMs (e.g., chain of serially connected WMs 410). In one illustrative example, a signal may be driven at one end of the chain of serially connected WMs 410 (e.g., at CS port A1 of first WM 430 or serial CS port B3 of third WM 450) and the chain can be configured in a forward-propagations pass-through configuration, a reverse-propagation pass-through configuration, a forward-propagation daisy-chain configuration, or a reverse-propagation pass-through configuration. In some cases, a connection failure in the chain of serially connected WMs 410 may result in a failure of the driven signal to propagate through the failed connection, which can in turn be used as a basis for detecting a connection failure.

In some cases, a failure connection process for detecting a connection failure may be completed without the use of pull-up or pull-down circuitry. However, as illustrated by the failure detection process 470, the inclusion of pull-down and/or pull-up circuitry may be used to distinguish between different types of connection failures.

It should also be understood that the specific identifier update values used at different steps of the failure detection process 470, the ordering of steps used in the failure detection process 470, the CS source selections used in the failure detection process 470, the number of steps included in the failure detection process 470, the choice to increment and/or decrement identifier values as part of the failure detection process 470, and/or any combination thereof may be changed without departing from the scope of the present disclosure.

### SERIAL COMMUNICATION FAILURE DETECTION CONFIGURATION

FIG. 5A illustrates an example serial communication failure detection configuration 600 for detecting serial communication failures in a chain of serially connected WMs 510. As illustrated, the chain of serially connected WMs 510 can include a first WM 530, a second WM 540, and a third WM 550 connected serially. In the example of FIG. 5A, a CLK port 501 and a DATA port 503 of a CM 505 can be coupled to respective clock ports 511 and data ports 513 of the first WM 530, second WM 540, and third WM 550 of the chain of serially connected WMs 510. In one illustrative example, the CM 505 and the WMs of the chain of serially connected WMs 510 can communicate over a two-wire serial interface. In one illustrative example, the two-wire serial interface can be compatible with the MIPI RFFE protocol. In some cases, the chain of serially connected WMs 510 can be similar to and perform similar functions to the first chain of serially connected WMs 210 of FIG. 2A. In the illustrated example of FIG. 5A, a serial communication fault is present at the clock port 511 and/or data port 513 of the second WM 540 of the chain of serially connected WMs 510. In such an example, the second WM 540 may be unable to correctly receive and act upon identifier update command sets transmitted by the CM 505 over the serial communication interface.

### DETECTING SERIAL COMMUNICATION FAILURE

FIG. 5B illustrates an example failure detection process 570 for detecting serial communication faults in WMs of the chains of serially connected WMs. For example, the CS selection may be set to "true" or a logical high value.

At step 572 of the failure detection process 570, identifier values for the first WM 530, second WM 540, and third WM 550 can be initialized to a value of zero (0). In some cases, during the failure detection process 570, the identifier value of each WM may be modified depending on whether or not a serial communication fault is present. Accordingly, the final identifier value assigned to a particular WM of the chain of serially connected WMs 510 can indicate whether a serial communication fault is present for the particular WM.

At step 574 of the failure detection process 570, a CS source selection for each WM of the chain of serially connected WMs 510 can be set to an active state (e.g., a logical "1") such that all of the WMs are expected to respond to any identifier update value provided by a CM (e.g., CM 505 of FIG. 5A). In some cases, an identifier update command set may be transmitted to all of the WMs with an identifier update value of one (1).

At step 575 of the failure detection process 570, any WM that successfully receives the identifier update command set may be increment a corresponding identifier value for the WM from the initial identifier value of zero (0) by the identifier update value of one (1), resulting in an updated identifier value of one (1).

At step 576 of the failure detection process 570, the final identifier values of the WMs of the chain of serially connected WMs 510 can be checked to determine whether any serially communication failures are present at the serial communication interface between the WMs of the chain of serially connected WMs 510 and the CM 505. For example, a final identifier value of one (one) for a WM may indicate that the serial communication interface for the particular WM is functioning properly.

FIG. 5C illustrates example identifier values for the first WM 530, second WM 540, and third WM 550 of the chain of serially connected WMs 510 after completion of the failure detection process 570 of FIG. 5B. As illustrated in FIG. 5C, a first identifier value 532 for the first WM 530 and a third identifier value 552 for the third WM 550 can have a value of one (1) indicative of a properly connected and functioning serial communication interface. In contrast, a second identifier value 542 for the second WM 540 can have a value of zero (0) indicative of a serial communication interface failure.

### ENUMERATION SEQUENCE FAILURE

FIG. 6A illustrates an example serial communication failure detection configuration 600 for WMs of a chain of serially connected WMs (e.g., first chain of serially connected WMs 210, second chain of serially connected WMs 220 of FIG. 2A). In some cases, the serial communication failure detection configuration 600 can be performed after an identifier enumeration (e.g., as shown in FIG. 2B through FIG. 2F). In some cases, the serial communication failure detection configuration 600 can be used to detect a serial communication failure that results in an erroneous identifier assignment for one or more WMs in the chain of serially connected WMs.

In some cases, a first chain of serially connected WMs 610 (e.g., corresponding to first chain of serially connected WMs 210 of FIG. 2A) and a second chain of serially connected WMs 620 (e.g., corresponding to second chain of serially connected WMs 220 of FIG. 2A) can undergo the enumeration sequence illustrated in FIG. 2B through FIG. 2F. As shown in FIG. 2F, the identifier values at the end of the enumeration sequence include an identifier value of three (3) for the first WM (e.g., first WM 230 of FIG. 2A) of the first chain of serially connected WMs 610, an identifier value of five (5) for the second WM (e.g., second WM 240 of FIG. 2A) of the first chain of serially connected WMs, an identifier value of seven (7) for the third WM (e.g., third WM 250 of FIG. 2A) of the first chain of serially connected WMs, an identifier value of four (4) for the first WM (e.g., first WM 260 of FIG. 2A) of the second chain of serially connected WMs 620, an identifier value of six (6) for the second WM (e.g., second WM 270 of FIG. 2A) of the second chain of serially connected WMs, and an identifier value of eight (8) for the third WM (e.g., third WM 280 of FIG. 1) of the second chain of serially connected WMs. In one illustrative example, the WMs of the first chain of serially connected WMs 610 and the second chain of serially connected WMs 620 can correspond to FEMs and/or analog beamformers in a phased array antenna system.

As shown in FIG. 6A, the WMs of the first chain of serially connected WMs 610 may be correctly assigned a first WM identifier value 602 of three (3) corresponding to the identifier value 242 shown in FIG. 2D, the second WM identifier value 604 of five (5) corresponding to the identifier value 252 shown in FIG. 2E, and a third WM identifier value 606 of seven (7) corresponding to the identifier value 262 shown in FIG. 2F. In addition, the first WM of the second chain of serially connected WMs 620 may be correctly assigned a first WM identifier value 612 of four (4) corresponding to the identifier value 244 shown in FIG. 2D.

However, as shown in FIG. 6A, due to a serial communication failure between the CM (e.g., CM 205 of FIG. 2A) and the second WM (e.g., second WM 270 of FIG. 2A) of the second chain of serially connected WMs 620 (e.g., second chain of serially connected WMs 220 of FIG. 2A), the second WM of the second chain of serially connected WMs 620 may not update its identifier based on identifier update command sequences issued during the identifier enumeration. Accordingly, the second WM of the second chain of serially connected WMs 620 may have an incorrect second WM identifier value 614 of zero (0) relative to the identifier value 254 of FIG. 2E. In one illustrative example, the serial communication failure for the second WM of the second chain of serially connected WMs 620 can correspond to the serial communication failure for the second WM 540 of the chain of serially connected WMs 510 of FIG. 5A.

In some implementations, when the serial communication failure is present at the second WM, the second WM may be initialized in a default operational mode. For example, the second WM (e.g., second WM 270 of FIG. 2A) of the second chain of serially connected WMs 620 with the serial communication failure may be initiated in a forward propagation pass-through mode between the IO port (e.g., IO port 216 of FIG. 2A) and the serial IO port (e.g., serial IO port 219 of FIG. 2A) of the second WM of the second chain of serially connected WMs. In some implementations, the forward propagation pass-through mode may correspond to a transmit (Tx) mode for a FEM and/or analog beamformer of a phased array antenna system.

In some cases, after the first WM (e.g., first WM 260 of FIG. 2A) of the second chain of serially connected WMs 620 updates its unique identifier after the first daisy-chain identifier value (e.g., included in a daisy-chain identifier update command set) is received by the first WM (e.g., incrementing the unique identifier by 2), the CS signal present at the IO port (e.g., IO port 216 of FIG. 2A) of the first WM can be passed-through and output from the serial IO port (e.g., serial IO port 219 of FIG. 2A) of the first WM (e.g., first WM 260 of FIG. 2A). In some cases, as a result of the default configuration of the second WM (e.g., first WM 260 of FIG. 2A) with the serial communication failure and passed through the second WM 170 to the IO port 116 of the third WM 180. Accordingly, once the second daisy-chain identifier value is received by the third WM 180, the third WM 180 may update its identifier value prematurely by incrementing its identifier value by four (4). As noted above with respect to the enumeration sequence of FIG. 2B through FIG. 2F, once a WM in a chain of serially connected WMs has been updated during a daisy-chain command sequence, any further identifier update values output by the CM may be ignored by the third WM 180 of the second chain of serially connected WMs 120. Accordingly, an incorrect third WM identifier value 616 of six (6) may be assigned to the third WM (e.g., third WM 280 of FIG. 2A) after the enumeration sequence instead of the identifier value 264 of eight (8) shown in FIG. 2F.

### DETECTING SERIAL COMMUNICATION FAILURE

In some cases, to determine that a chain of serially connected WMs has a serial communication fault, the serially connected chains of WMs can be configured in a reverse propagation pass-through mode. The serial IO ports of the WMs of the first chain of serially connected WMs 610 and the second chain of serially connected WMs 620 may be configured in a a weak pull-up configuration that provides a weak connection to a high voltage level (e.g., a logical "1". In addition, the IO ports of the WMs of the first chain of serially connected WMs 610 and the second chain of serially connected WMs 620 may be configured to drive a low voltage level (e.g., a logical "0") that is stronger than the weak pull-up voltage at the serial IO ports. In some implementations, the serial IO ports of the third WM of the first chain of serially connected WMs 610 and the third WM of the second chain of serially connected WMs 620 may be coupled to a low voltage level (e.g., by a termination, by a connection to a port of a CM, by a weak pull-down resistance, or the like). Finally, the serial IO ports of the WMs of the first chain of serially connected WMs 610 and the second chain of serially connected WMs 620 may be selected as the CS source selection.

In some cases, as a result of the serial communication failure at the second WM 170 of the second chain of serially connected WMs 120, the second WM 170 may not be successfully configured in the reverse propagation configuration. In some cases, as noted above, a default configuration for the second WM (e.g., second WM 270 of FIG. 2A) may include operating the second WM in a forward propagation pass-through mode. As a result, the low voltage level drive expected at the IO port of the second WM of the second chain of serially connected WMs 620 will not be present and the weak pull-up voltage at the serial IO port of the first WM of the second chain of serially connected WMs 620 will pull up the voltage at the serial IO port of the first WM to a high voltage level. As noted above, the serial IO port of the first WM also corresponds to the CS source selection for the first WM.

In some cases, a CM may read the CS value for the selected CS state at each of the expected identifier addresses (e.g., 3, 5, 7, 4, 6, 8) of the WMs of the first chain of serially connected WMs 610 and the second chain of serially connected WMs 620. As illustrated in FIG. 6A, the CS state of all of the WMs of the first chain of serially connected WMs 610 can be a low voltage level and the CS state of the third WM of the second chain of serially connected WMs 620 may also be at a low voltage level. However, the CS state of the first WM of the second chain of serially connected WMs 620 may be at a high voltage level, indicating a serial communication failure at the second WM of the second chain of serially connected WMs 620.

### REPAIRING IDENTIFIER AFTER DETECTING SERIAL COMMUNICATION FAILURE

FIG. 6B illustrates an example of a repair procedure 630 for repairing WM identifiers of WMs in the second chain of serially connected WMs 620 having a serial communication failure. As illustrated in FIG. 6B, the repair procedure can including configuring the WMs of the second chain of serially connected WMs 620 in a forward propagation direction, selecting the IO ports (e.g., IO ports 216 of FIG. 2A, "A" ports of FIG. 5A) of the WMs as the CS source, and driving a serial IO port (e.g., serial IO port 219 of FIG. 2A) of the first WM of the second chain of serially connected WMs 620 with an active state of a CS signal (e.g., a high voltage, a logical "1"). In some cases, the first WM of the second chain of serially connected WMs 620 can be selected for driving the active state of the CS signal from the serial IO port of the first WM using the unique identifier address assigned to the first WM (e.g., four (4)). In some implementations, the first WM can be selected to output the active state of the CS signal based on detecting the serial communication failure at the second WM of the second chain of serially connected WMs 620 as described with respect to FIG. 5B and/or FIG. 6A. In the configuration of FIG. 6B, the first WM of the second chain of serially connected WMs 620 represents the WM farthest down the second chain of serially connected WMs 620 that has a known working serial communication connection. As noted above, the second WM of the second chain of serially connected WMs 620 with the serial communication failure may be operated in a default configuration including a forward propagation direction from the IO port (e.g., IO port 216 of FIG. 2A) to the serial IO port (e.g., serial IO port 219 of FIG. 2A) of the second WM. In the example of FIG. 6B, the third WM of the second chain of serially connected WMs 620 can obtain the active state of the CS signal at the selected CS source (e.g., the IO port of the third WM) such that an identifier update command set received over the serial communication interface causes the identifier value of the third WM to change. In the example of FIG. 6B, the repair procedure 630 can include transmitting an identifier update value of two (2) to be added to the identifier value of six (6) of the third WM, resulting in a repaired third WM identifier value 646 of eight (8). Comparing the repaired third WM identifier value 646 of FIG. 6B to the identifier value 264 of FIG. 2F, it can be seen that the repair procedure 630 can correctly assign the identifier value of the third WM despite the serial communication failure at the second WM of the second chain of serially connected WMs 620.

In addition, the correctly assigned first WM identifier value 602, second WM identifier value 604, third WM identifier value 606, and first WM identifier value 612 shown in FIG. 6A are not altered by the repair procedure 630 of FIG. 6B. The second WM identifier value 614 may not be repairable due to the serial communication failure and thus the second WM identifier value 614 may retain a value of zero (0) after completion of the repair procedure 630.

While not shown, if the second chain of serially connected WMs 620 were to include additional WMs (e.g., a fourth WM, a fifth WM, etc.) coupled in series after the third WM of the second chain of serially connected WMs 620 would also obtain the active state of the CS signal at respective selected CS sources (e.g., respective IO ports) such that an identifier update command set received over the serial communication interface causes identifier values of the additional WMs to increment.

FIG. 7A is a flow diagram illustrating a process 700 for detecting connection failures in chains of serially connected WMs. At step 702, the process 700 includes driving a CS signal at a known voltage level to a first IO port of a first WM of a chain of serially connected WMs.

At step 704, the process 700 includes propagating the CS signal to a second IO port of the first WM. The second IO port of the first WM is configured to be coupled to a first IO port of a second WM of the chain of serially connected WMs.

At step 706, the process 700 includes determining, based on detecting that a signal at a voltage level different than the known voltage level is present at the first IO port of the second WM, that a connection failure is present between the first WM and the second WM.

In some cases, the process 700 further includes configuring the first IO port of the second WM in a pull-up configuration. In some examples, the known voltage level is a low voltage level. In some implementations, determining that the connection failure is present between the first WM and the second WM includes determining that a high voltage level is present at the first IO port of the second WM.

In some cases, the process 700 further includes configuring the first IO port of the second WM in a pull-down configuration. In some examples, the known voltage level is a high voltage level. In some implementations, determining that the connection failure is present between the first WM and the second WM includes determining that a low voltage level is present at the first IO port of the second WM.

In some cases, the first IO port of the first WM is a serial CS port, the second IO port of the first WM is a CS port, and the first IO port of the second WM is a serial CS port. In some examples, the chain of serially connected WMs is configured in a reverse propagation pass-through configuration.

In some cases, the first IO port of the first WM comprises a CS port, the second IO port of the first WM comprises a serial CS port, and the first IO port of the second WM comprises a CS port. In some examples, the chain of serially connected WMs is configured in a forward propagation pass-through configuration.

In some implementations, the process 700 includes setting a flag indicative of a connection failure for the second WM. In some cases, the flag is indicative of a type of connection failure for the second WM. In some examples, the flag can be a stuck at one (1) fault, stuck at zero (0) fault, or open fault.

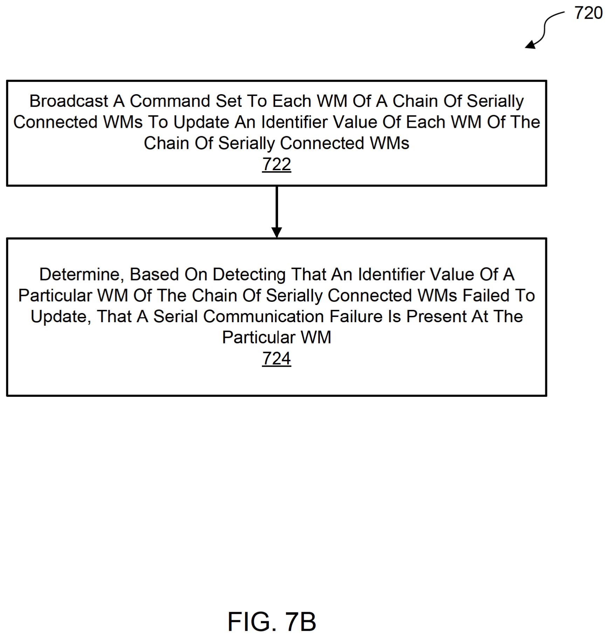

FIG. 7B is a flow diagram illustrating a process 720 for detecting connection failures in chains of serially connected WMs. At step 722, the process 720 includes broadcasting a command set to each WM of a chain of serially connected WMs to update an identifier value of each WM of the chain of serially connected WMs.

At step 724, the process 720 includes determining, based on detecting that an identifier value of a particular WM of the chain of serially connected WMs failed to update, that a serial communication failure is present at the particular WM.

In some cases, the process 720 further includes repairing identifier values of additional WMs of the chain of serially connected WMs subsequent to the particular WM relative to a CS signal propagation direction associated with an identifier enumeration procedure for the chain of serially connected WMs.

In some examples, the command to update the identifier value of each WM of the chain of serially connected WMs is an unconditional command. In some cases, the command is an unconditional command based on a CS source selection included in the command set. In some implementations, the CS source selection included in the command set comprises a static voltage level.

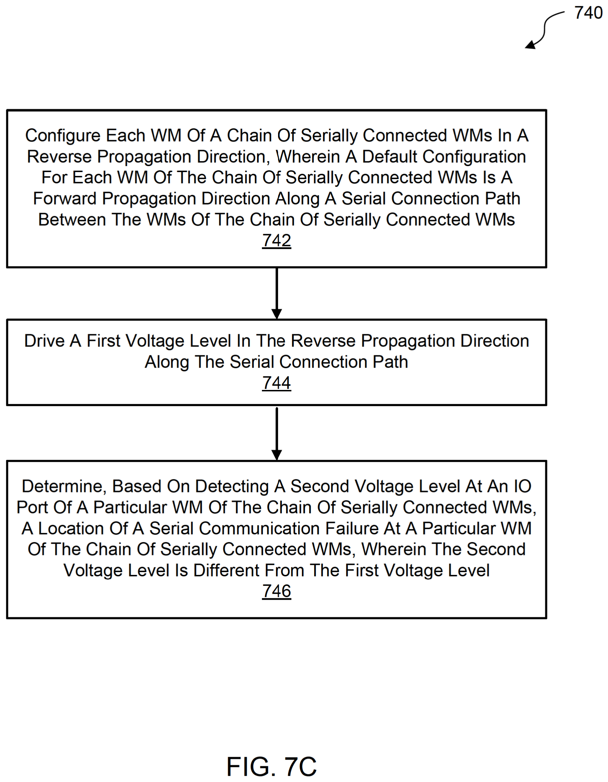

FIG. 7C is a flow diagram illustrating a process 740 for detecting connection failures in chains of serially connected WMs. At step 742, the process 740 includes configuring each WM of a chain of serially connected WMs in a reverse propagation direction. A default configuration for each WM of the chain of serially connected WMs is a forward propagation direction along a serial connection path between the WMs of the chain of serially connected WMs.

At step 744, the process 740 includes driving a first voltage level in the reverse propagation direction along the serial connection path.

At step 746, the process 740 includes determining, based on detecting a second voltage level at an IO port of a particular WM of the chain of serially connected WMs, a location of a serial communication failure at a particular WM of the chain of serially connected WMs. The second voltage level is different from the first voltage level. In some cases, the second voltage level is provided by a pull-up circuit or a pull-down circuit.

In some examples, the location of the serial communication failure is an additional particular WM of the chain of serially connected WMs, different from the particular WM of the chain of serially connected WMs.

In some implementations, the process 740 further includes repairing identifier values of additional WMs of the chain of serially connected WMs subsequent to the particular WM relative to a CS signal propagation direction associated with an identifier enumeration procedure for the chain of serially connected WMs. In some cases, the CS signal propagation direction associated with the identifier enumeration procedure for the chain of serially connected WMs is a forward propagation direction.

In some examples, repairing the identifier values of the additional WMs of the chain of serially connected WMs includes driving, by the particular WM, an active level of a CS signal in the CS signal propagation direction associated with the identifier enumeration procedure for the chain of serially connected WMs and updating the identifier values of the additional WMs. In some implementations, updating the identifier values of the additional WMs comprises incrementing the identifier values of the additional WMs.

In some cases, one or more operations described herein can be implemented in hardware, computer instructions, or a combination thereof. In the context of computer instructions, the operations represent computer-executable instructions stored on one or more computer-readable storage media that, when executed by one or more processors, perform the recited operations. Generally, computer-executable instructions include routines, programs, objects, components, data structures, and the like that perform particular functions or implement particular data types. The order in which any operations are described is not intended to be construed as a limitation, and any number of the described operations can be combined in any order and/or in parallel to implement the processes.

FIG. 8 illustrates an example computing device 800 which can implement various techniques and/or operations described herein. For example, the example computing device 800 can be used to implement at least some portions of the configuration 100 of FIG. 1, the configuration 200 of FIG. 2A, the WM 300 of FIG. 3A, the configuration 400 of FIG. 4A, the configuration 500 of FIG. 5A, failure detection process 570 of FIG. 5B, serial communication failure detection configuration 600 of FIG. 6A, and/or the repair procedure 630 of FIG. 6B, and perform at least some of the operations described herein. The components of the example computing device 800 are shown in electrical communication with each other using a connection 805, such as a bus. The example computing device 800 includes a processing unit (CPU or processor 810) and a connection 805 that couples various computing device components including the memory 815, such as read only memory 820 and random access memory 825, to the processor 810.

The example computing device 800 can include a cache of high-speed memory connected directly with, in close proximity to, or integrated as part of the processor 810. The example computing device 800 can copy data from the memory 815 and/or the storage device 830 to the cache 812 for quick access by the processor 810. In this way, the cache 812 can provide a performance boost that avoids processor 810 delays while waiting for data. These and other modules can control or be configured to control the processor 810 to perform various actions. Other memory 815 may be available for use as well. The memory 815 can include multiple different types of memory with different performance characteristics. The processor 810 can include any general purpose processor and a hardware or software service stored in storage device 830 and configured to control the processor 810 as well as a special-purpose processor where software instructions are incorporated into the processor design. The processor 810 may be a self-contained system, containing multiple cores or processors, a bus, memory controller, cache, etc. A multi-core processor may be symmetric or asymmetric.

To enable user interaction with the example computing device 800, an input device 845 can represent any number of input mechanisms, such as a microphone for speech, a touchsensitive screen for gesture or graphical input, keyboard, mouse, motion input, speech and so forth. An output device 835 can also be one or more of a number of output mechanisms known to those of skill in the art, such as a display, projector, television, speaker device. In some instances, multimodal computing devices can enable a user to provide multiple types of input to communicate with the example computing device 800. The communication interface 840 can generally govern and manage the user input and computing device output. There is no restriction on operating on any particular hardware arrangement and therefore the basic features here may easily be substituted for improved hardware or firmware arrangements as they are developed.

Storage device 830 is a non-volatile memory and can be a hard disk or other types of computer readable media which can store data that are accessible by a computer, such as magnetic cassettes, flash memory cards, solid state memory devices, digital versatile disks, cartridges, random access memories (RAMs) 825, read only memories (ROMs) 820, and hybrids thereof. The storage device 830 can include software, code, firmware, etc., for controlling the processor 810. Other hardware or software modules are contemplated. The storage device 830 can be connected to the connection 805. In one aspect, a hardware module that performs a particular function can include the software component stored in a computer-readable medium in connection with the necessary hardware components, such as the processor 810 connection 805, output device 835, and so forth, to carry out the function.

The components of the computing device can be implemented in circuitry. For example, the components can include and/or can be implemented using electronic circuits or other electronic hardware, which can include one or more programmable electronic circuits (e.g., microprocessors, graphics processing units (GPUs), digital signal processors (DSPs), central processing units (CPUs), and/or other suitable electronic circuits), and/or can include and/or be implemented using computer software, firmware, or any combination thereof, to perform the various operations described herein. The computing device may further include a display (as an example of the output device or in addition to the output device), a network interface configured to communicate and/or receive the data, any combination thereof, and/or other component(s). The network interface may be configured to communicate and/or receive Internet Protocol (IP) based data or other type of data.

The term "computer-readable medium" includes, but is not limited to, portable or nonportable storage devices, optical storage devices, and various other mediums capable of storing, containing, or carrying instruction(s) and/or data. A computer-readable medium may include a non-transitory medium in which data can be stored and that does not include carrier waves and/or transitory electronic signals propagating wirelessly or over wired connections. Examples of a non-transitory medium may include, but are not limited to, a magnetic disk or tape, optical storage media such as compact disk (CD) or digital versatile disk (DVD), flash memory, memory or memory devices. A computer-readable medium may have stored thereon code and/or machineexecutable instructions that may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, or the like.

In some examples, the computer-readable storage devices, mediums, and memories can include a cable or wireless signal containing a bit stream and the like. However, when mentioned, non-transitory computer-readable storage media expressly exclude media such as energy, carrier signals, electromagnetic waves, and signals per se.

The components of the computing device can be implemented in circuitry. For example, the components can include and/or can be implemented using electronic circuits or other electronic hardware, which can include one or more programmable electronic circuits (e.g., microprocessors, graphics processing units (GPUs), digital signal processors (DSPs), central processing units (CPUs), and/or other suitable electronic circuits), and/or can include and/or be implemented using computer software, firmware, or any combination thereof, to perform the various operations described herein. The computing device may further include a display (as an example of the output device or in addition to the output device), a network interface configured to communicate and/or receive the data, any combination thereof, and/or other component(s). The network interface may be configured to communicate and/or receive Internet Protocol (IP) based data or other type of data.

The term "computer-readable medium" includes, but is not limited to, portable or nonportable storage devices, optical storage devices, and various other mediums capable of storing, containing, or carrying instruction(s) and/or data. A computer-readable medium may include a non-transitory medium in which data can be stored and that does not include carrier waves and/or transitory electronic signals propagating wirelessly or over wired connections. Examples of a non-transitory medium may include, but are not limited to, a magnetic disk or tape, optical storage media such as compact disk (CD) or digital versatile disk (DVD), flash memory, memory or memory devices. A computer-readable medium may have stored thereon code and/or machineexecutable instructions that may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, or the like.

In some examples, the computer-readable storage devices, mediums, and memories can include a cable or wireless signal containing a bit stream and the like. However, when mentioned, non-transitory computer-readable storage media expressly exclude media such as energy, carrier signals, electromagnetic waves, and signals per se.

Specific details are provided in the description above to provide a thorough understanding of the embodiments and examples provided herein. However, it will be understood by one of ordinary skill in the art that the embodiments may be practiced without these specific details. For clarity of explanation, in some instances the present technology may be presented as including individual functional blocks comprising devices, device components, steps or routines in a method embodied in software, or combinations of hardware and software. Additional components may be used other than those shown in the figures and/or described herein. For example, circuits, systems, networks, processes, and other components may be shown as components in block diagram form in order not to obscure the embodiments in unnecessary detail. In other instances, well-known circuits, processes, algorithms, structures, and techniques may be shown without unnecessary detail in order to avoid obscuring the embodiments.

Individual embodiments may be described above as a process or method which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be re-arranged. A process is terminated when its operations are completed, but could have additional steps not included in a figure. A process may correspond to a method, a function, a procedure, a subroutine, a subprogram, etc. When a process corresponds to a function, its termination can correspond to a return of the function to the calling function or the main function.

Processes and methods according to the above-described examples can be implemented using signals and/or computer-executable instructions that are stored or otherwise available from computer-readable media. Such instructions can include, for example, instructions and data which cause or otherwise configure a general purpose computer, special purpose computer, or a processing device to perform a certain function or group of functions. Portions of computer resources used can be accessible over a network. The computer executable instructions may be, for example, binaries, intermediate format instructions such as assembly language, firmware, source code. Examples of computer-readable media that may be used to store instructions, information used, and/or information created during methods according to described examples include magnetic or optical disks, flash memory, USB devices provided with non-volatile memory, networked storage devices, and so on.

Devices implementing processes and methods according to these disclosures can include hardware, software, firmware, middleware, microcode, hardware description languages, or any combination thereof, and can take any of a variety of form factors. When implemented in software, firmware, middleware, or microcode, the program code or code segments to perform the necessary tasks (e.g., a computer-program product) may be stored in a computer-readable or machine-readable medium. A processor(s) may perform the necessary tasks. Typical examples of form factors include laptops, smart phones, mobile phones, tablet devices or other small form factor personal computers, personal digital assistants, rackmount devices, standalone devices, and so on. Functionality described herein also can be embodied in peripherals or add-in cards. Such functionality can also be implemented on a circuit board among different chips or different processes executing in a single device, by way of further example.

The instructions, media for conveying such instructions, computing resources for executing them, and other structures for supporting such computing resources are example means for providing the functions described in the disclosure.

In the foregoing description, aspects of the application are described with reference to specific embodiments thereof, but those skilled in the art will recognize that the application is not limited thereto. Thus, while illustrative embodiments of the application have been described in detail herein, it is to be understood that the inventive concepts may be otherwise variously embodied and employed, and that the appended claims are intended to be construed to include such variations, except as limited by the prior art. Various features and aspects of the above-described application may be used individually or jointly. Further, embodiments can be utilized in any number of environments and applications beyond those described herein without departing from the broader spirit and scope of the specification. The specification and drawings are, accordingly, to be regarded as illustrative rather than restrictive. For the purposes of illustration, methods were described in a particular order. It should be appreciated that in alternate embodiments, the methods may be performed in a different order than that described.

One of ordinary skill will appreciate that the less than ("<") and greater than (">") symbols or terminology used herein can be replaced with less than or equal to (" ≤ ") and greater than or equal to (" ≥") symbols, respectively, without departing from the scope of this description.

Where components are described as being "configured to" perform certain operations, such configuration can be accomplished, for example, by designing electronic circuits or other hardware to perform the operation, by programming programmable electronic circuits (e.g., microprocessors, or other suitable electronic circuits) to perform the operation, or any combination thereof.

Claim language or other language in the disclosure reciting "at least one of" a set and/or "one or more" of a set indicates that one member of the set or multiple members of the set (in any combination) satisfy the claim. For example, claim language reciting "at least one of A and B" or "at least one of A or B" means A, B, or A and B. In another example, claim language reciting "at least one of A, B, and C" or "at least one of A, B, or C" means A, B, C, or A and B, or A and C, or B and C, or A and B and C. The language "at least one of" a set and/or "one or more" of a set does not limit the set to the items listed in the set. For example, claim language reciting "at least one of A and B" or "at least one of A or B" can mean A, B, or A and B, and can additionally include items not listed in the set of A and B.

The various illustrative logical blocks, modules, circuits, and algorithm steps described in connection with the examples disclosed herein may be implemented as electronic hardware, computer software, firmware, or combinations thereof. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present application.

The techniques described herein may also be implemented in electronic hardware, computer software, firmware, or any combination thereof. Such techniques may be implemented in any of a variety of devices such as general purposes computers, wireless communication devices, or integrated circuit devices having multiple uses including application in wireless communications and other devices. Any features described as modules or components may be implemented together in an integrated logic device or separately as discrete but interoperable logic devices. If implemented in software, the techniques may be realized at least in part by a computer-readable data storage medium comprising program code including instructions that, when executed, performs one or more of the methods, algorithms, and/or operations described above. The computer-readable data storage medium may form part of a computer program product, which may include packaging materials. The computer-readable medium may comprise memory or data storage media, such as random access memory (RAM) such as synchronous dynamic random access memory (SDRAM), read-only memory (ROM), non-volatile random access memory (NVRAM), electrically erasable programmable read-only memory (EEPROM), FLASH memory, magnetic or optical data storage media, and the like. The techniques additionally, or alternatively, may be realized at least in part by a computer-readable communication medium that carries or communicates program code in the form of instructions or data structures and that can be accessed, read, and/or executed by a computer, such as propagated signals or waves.

The program code may be executed by a processor, which may include one or more processors, such as one or more digital signal processors (DSPs), general purpose microprocessors, an application specific integrated circuits (ASICs), field programmable logic arrays (FPGAs), or other equivalent integrated or discrete logic circuitry. Such a processor may be configured to perform any of the techniques described in this disclosure. A general purpose processor may be a microprocessor; but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. Accordingly, the term "processor," as used herein may refer to any of the foregoing structure, any combination of the foregoing structure, or any other structure or apparatus suitable for implementation of the techniques described herein.

The following numbered paragraphs contain statements of broad combinations of technical features in accordance with various aspects of devices and methods disclosed herein:
1. A method for detecting connection failures for serially connected worker modules (WMs), the method comprising:
   driving a chip select (CS) signal at a known voltage level to a first IO port of a first WM of a chain of serially connected WMs;
   propagating the CS signal to a second IO port of the first WM, wherein the second IO port of the first WM is configured to be coupled to a first IO port of a second WM of the chain of serially connected WMs; and
   determining, based on detecting that a signal at a voltage level different than the known voltage level is present at the first IO port of the second WM, that a connection failure is present between the first WM and the second WM.
2. The method of paragraph 1, further comprising configuring the first IO port of the second WM in a pull-up configuration, wherein the known voltage level is a low voltage level, and wherein determining that the connection failure is present between the first WM and the second WM comprises determining that a high voltage level is present at the first IO port of the second WM.
3. The method of paragraph 1, further comprising configuring the first IO port of the second WM in a pull-down configuration, wherein the known voltage level is a high voltage level, and wherein determining that the connection failure is present between the first WM and the second WM comprises determining that a low voltage level is present at the first IO port of the second WM.
4. The method of paragraph 1, wherein the first IO port of the first WM comprises a serial CS port, the second IO port of the first WM comprises a CS port, and the first IO port of the second WM comprises a serial CS port.
5. The method of paragraph 4, wherein the chain of serially connected WMs is configured in a reverse propagation pass-through configuration.
6. The method of paragraph 1, wherein the first IO port of the first WM comprises a CS port, the second IO port of the first WM comprises a serial CS port, and the first IO port of the second WM comprises a CS port.
7. The method of paragraph 6, wherein the chain of serially connected WMs is configured in a forward propagation pass-through configuration.
8. The method of paragraph 1, further comprising setting a flag indicative of a connection failure for the second WM.
9. The method of paragraph 8, wherein the flag is indicative of a type of connection failure for the second WM.
10. The method of paragraph 9, wherein the flag comprises a stuck at one (1) fault, stuck at zero (0) fault, or open fault.
11. A method for detecting connection failures for serially connected worker modules (WMs), the method comprising:
   broadcasting a command set to each WM of a chain of serially connected WMs to update an identifier value of each WM of the chain of serially connected WMs; and
   determining, based on detecting that an identifier value of a particular WM of the chain of serially connected WMs failed to update, that a serial communication failure is present at the particular WM.
12. The method of paragraph 11, further comprising repairing identifier values of additional WMs of the chain of serially connected WMs subsequent to the particular WM relative to a CS signal propagation direction associated with an identifier enumeration procedure for the chain of serially connected WMs.
13. The method of paragraph 11, wherein the command to update the identifier value of each WM of the chain of serially connected WMs is an unconditional command.
14. The method of paragraph 13, wherein the command is an unconditional command based on a CS source selection included in the command set.
15. The method of paragraph 14, wherein the CS source selection included in the command set comprises a static voltage level.
16. A method for detecting connection failures for chains of serially connected worker modules (WMs), the method comprising:
   configuring each WM of a chain of serially connected WMs in a reverse propagation direction, wherein a default configuration for each WM of the chain of serially connected WMs is a forward propagation direction along a serial connection path between the WMs of the chain of serially connected WMs;
   driving a first voltage level in the reverse propagation direction along the serial connection path; and
   determining, based on detecting a second voltage level at an IO port of a particular WM of the chain of serially connected WMs, a location of a serial communication failure at a particular WM of the chain of serially connected WMs, wherein the second voltage level is different from the first voltage level.
17. The method of paragraph 16, wherein the second voltage level is provided by a pull-up circuit or a pull-down circuit.
18. The method of paragraph 16, wherein the location of the serial communication failure is an additional particular WM of the chain of serially connected WMs, different from the particular WM of the chain of serially connected WMs.
19. The method of paragraph 16, further comprising repairing identifier values of additional WMs of the chain of serially connected WMs subsequent to the particular WM relative to a CS signal propagation direction associated with an identifier enumeration procedure for the chain of serially connected WMs.
20. The method of paragraph 19, wherein the CS signal propagation direction associated with the identifier enumeration procedure for the chain of serially connected WMs is a forward propagation direction.
21. The method of paragraph 19, wherein repairing the identifier values of the additional WMs of the chain of serially connected WMs comprises driving, by the particular WM, an active level of a CS signal in the CS signal propagation direction associated with the identifier enumeration procedure for the chain of serially connected WMs and updating the identifier values of the additional WMs.
22. The method of paragraph 21, wherein updating the identifier values of the additional WMs comprises incrementing the identifier values of the additional WMs.
23. An apparatus for detecting connection faults in serially connected worker modules (WMs), the apparatus comprising:
   a chain of serially connected WMs comprising:
   a first WM of the chain of serially connected WMs, the first WM comprising a first communication interface, a first chip select (CS) port, a first serial CS port, a first CS source select module, a first data storage device, and a first failure detection circuitry coupled between the first CS port and the first serial CS port; and
   a second WM of the chain of serially connected WMs, the second WM comprising a second communication interface, a second CS port coupled to the first serial CS port, a second serial CS port, a second CS source select module, a second data storage device and a second failure detection circuit coupled between the second CS port and the second serial CS port; and
   a command module (CM) comprising a CM communication interface coupled to the first communication interface and the second communication interface, wherein the CM is configured to:
      transmit one or more commands to the first WM and the second WM, wherein each command of the one or more commands correspond to a sequence of CS propagation directions, CS source selections, CS port drive states, serial CS port drive states, pull-up/pull-down states, and/or identifier update values; and
      detect one or more connection faults associated with a serial connection between the first WM and the second WM based on the one or more commands.
24. The apparatus of paragraph 23, wherein the first data storage device and the second data storage device comprise a first unique identifier register and a second unique identifier register, respectively.

While illustrative embodiments have been illustrated and described, it will be appreciated that various changes can be made therein without departing from the spirit and scope of the disclosure.

## Claims

1. A method for detecting connection failures for serially connected worker modules (WMs), the method comprising:
driving a chip select (CS) signal at a known voltage level to a first IO port of a first WM of a chain of serially connected WMs;
propagating the CS signal to a second IO port of the first WM, wherein the second IO port of the first WM is configured to be coupled to a first IO port of a second WM of the chain of serially connected WMs; and
determining, based on detecting that a signal at a voltage level different than the known voltage level is present at the first IO port of the second WM, that a connection failure is present between the first WM and the second WM.

2. The method of claim 1, further comprising configuring the first IO port of the second WM in a pull-up configuration, wherein the known voltage level is a low voltage level, and wherein determining that the connection failure is present between the first WM and the second WM comprises determining that a high voltage level is present at the first IO port of the second WM.

3. The method of claim 1, further comprising configuring the first IO port of the second WM in a pull-down configuration, wherein the known voltage level is a high voltage level, and wherein determining that the connection failure is present between the first WM and the second WM comprises determining that a low voltage level is present at the first IO port of the second WM.

4. The method of claim 1, wherein the first IO port of the first WM comprises a serial CS port, the second IO port of the first WM comprises a CS port, and the first IO port of the second WM comprises a serial CS port.

5. The method of claim 4, wherein the chain of serially connected WMs is configured in a reverse propagation pass-through configuration.

6. The method of claim 1, wherein the first IO port of the first WM comprises a CS port, the second IO port of the first WM comprises a serial CS port, and the first IO port of the second WM comprises a CS port.

7. The method of claim 6, wherein the chain of serially connected WMs is configured in a forward propagation pass-through configuration.

8. The method of claim 1, further comprising setting a flag indicative of a connection failure for the second WM.

9. The method of claim 8, wherein the flag is indicative of a type of connection failure for the second WM.

10. The method of claim 9, wherein the flag comprises a stuck at one (1) fault, stuck at zero (0) fault, or open fault.

11. A method for detecting connection failures for serially connected worker modules (WMs), the method comprising:
broadcasting a command set to each WM of a chain of serially connected WMs to update an identifier value of each WM of the chain of serially connected WMs; and
determining, based on detecting that an identifier value of a particular WM of the chain of serially connected WMs failed to update, that a serial communication failure is present at the particular WM.

12. The method of claim 11, further comprising repairing identifier values of additional WMs of the chain of serially connected WMs subsequent to the particular WM relative to a CS signal propagation direction associated with an identifier enumeration procedure for the chain of serially connected WMs.

13. The method of claim 11, wherein the command to update the identifier value of each WM of the chain of serially connected WMs is an unconditional command.

14. An apparatus for detecting connection faults in serially connected worker modules (WMs), the apparatus comprising:
a chain of serially connected WMs comprising:
a first WM of the chain of serially connected WMs, the first WM comprising a first communication interface, a first chip select (CS) port, a first serial CS port, a first CS source select module, a first data storage device, and a first failure detection circuitry coupled between the first CS port and the first serial CS port; and
a second WM of the chain of serially connected WMs, the second WM comprising a second communication interface, a second CS port coupled to the first serial CS port, a second serial CS port, a second CS source select module, a second data storage device and a second failure detection circuit coupled between the second CS port and the second serial CS port; and
a command module (CM) comprising a CM communication interface coupled to the first communication interface and the second communication interface, wherein the CM is configured to:
transmit one or more commands to the first WM and the second WM, wherein each command of the one or more commands correspond to a sequence of CS propagation directions, CS source selections, CS port drive states, serial CS port drive states, pull-up/pull-down states, and/or identifier update values; and
detect one or more connection faults associated with a serial connection between the first WM and the second WM based on the one or more commands.

15. The apparatus of claim 14, wherein the first data storage device and the second data storage device comprise a first unique identifier register and a second unique identifier register, respectively.
